# EUROPEAN PATENT SPECIFICATION

(11) **EP 3 491 790 B1**
(45) Date of publication and mention of the grant of the patent: **29.04.2020**
(21) Application number: 17842972.6
(22) Date of filing: 24.08.2017
(51) Int. Cl.: H04L 12/24, H04L 12/26, H04L 12/733, H04L 29/08

(54) **A HYBRID APPROACH WITH CLASSIFICATION FOR NAME RESOLUTION AND PRODUCER SELECTION IN ICN**
HYBRIDER ANSATZ MIT KLASSIFIZIERUNG ZUR NAMENSAUFLÖSUNG UND ERZEUGERAUSWAHL IN ICN
APPROCHE HYBRIDE AVEC CLASSIFICATION POUR UNE RÉSOLUTION DE NOM ET SÉLECTION DE PRODUCTEUR DANS UN ICN

(30) Priority: 25.08.2016 US 201662379340 P; 15.03.2017 US 201762471743 P; 23.08.2017 US 201715684719
(43) Date of publication of application: 05.06.2019
(73) Proprietor: Huawei Technologies Co., Ltd., Longgang District Shenzhen, Guangdong 518129 (CN)
(72) Inventor: DONG, Lijun, Shenzhen, Guangdong 518129 (CN); WANG, Guoqiang, Shenzhen, Guangdong 518129 (CN)
(74) Representative: Goddar, Heinz J.
(86) International application number: PCT/CN2017/098895
(87) International publication number: WO 2018/036550

(56) References cited:
- EP-A1- 2 835 942
- EP-A1- 3 038 323
- WO-A1-2015/009668
- CN-A- 104 253 855
- CN-A- 105 812 328
- US-A1- 2012 259 946
- US-A1- 2015 372 947
- DONG, LIJUN ET AL.: 'A Robust and Lightweight Name Resolution Approach for IoT Data in ICN' 2017 NINTH INTERNATIONAL CONFERENCE ON UBIQUITOUS AND FUTURE NETWORKS (ICUFN 07 July 2017, ISSN 2165-8536 XP033130285

## Description

### FIELD

The present technology generally relates to the field of classifying and selecting a network node.

### BACKGROUND

In an Information-Centric Network (ICN), also referred to as a content oriented network (CON), a domain-wide unique name is assigned to each entity that is part of a content delivery framework. The entities may comprise data content, such as video clips or web pages, and/or infrastructure elements, such as routers, switches, or servers. The content router uses name prefixes, which can be full content names or proper prefixes of content names instead of network addresses, to route content packets within the content network. In the ICN, content delivery including publishing, requesting, managing (e.g., modification, deletion, etc.) may be based on content name as opposed to content location.

One aspect of the ICN that may be different from traditional Internet Protocol (IP) networks is the ability of the ICN to interconnect multiple geographical points and cache content temporarily or store content on a more persistent basis. This may allow content to be served from the network instead of an original server. Accordingly, the caching/storing may be used for real time data that is fetched by the user or for persistent data that belongs to the user or to a content provider, e.g., a third party provider. The ICN approach is being developed in several projects, such as Data-Oriented Network Architecture (DONA), Publish Subscribe Internet Technology (PURSUIT), Scalable and Adaptive Internet Solutions (SAIL), CONVERGENCE and Named Data Networking (NDN).

EP 3 038 323 A1 discloses a virtual broadcast system that optimizes the routing of digital content among nodes along overlay networks that are dynamically reconfigured based upon forecasts of frequently-changing congestion levels of component interconnections within an underlying network. In the context of delivering streaming video over the Internet to large numbers of concurrent users, the system makes efficient use of the limited capacity of congested ASN peering points by employing deep learning techniques to forecast congestion levels across those ASN peering points and, based on those forecasts, to optimize the routing of video content along dynamically reconfigured overlay networks. The virtual broadcast system handles unscheduled as well as scheduled events, streams live as well as pre-recorded events, and streams those events in real time with minimal delay in a highly scalable fashion that maintains a consistent QoE among large numbers of concurrent viewers.

### BRIEF SUMMARY

According to one aspect of the present disclosure, there is provided a method for classifying a node in a network, including receiving, by the node, content published from one or more content producers in the network, wherein the node comprises sufficient storage and processing capability to store and process the content received; determining whether the node can receive additional content that is published for one or more other nodes in the network; calculating a metric for paths from the node to each of the one or more content producers in the network in response to determining that additional content can be received by the node; and classifying the node as a home node in the network in response to determining that the metric for paths of the node to the one or more content producers is shorter than a metric for paths of each of the one or more other nodes in the network to the one or more content producers, wherein the home node is configured to provide the additional content to the one or more other nodes in the network.

Optionally, in any of the preceding aspects, the method further including receiving an announcement message from a new content producer; calculating the metric for path between the home node and each of the content producers, including the new content producer, in the network; and determining whether to change the home node to a new home node based on the calculated matric for path of the home node being longer than a metric for path corresponding to any one of the one or more other nodes.

Optionally, in any of the preceding aspects, the method further including receiving a deactivation notification message from one or more of the content producers; and removing the one or more content producers sending the deactivation notification message from local storage of the home node.

Optionally, in any of the preceding aspects, the method further including transmitting a transfer request to one of the one or more other nodes, including content name for the content stored in the home node; and receiving a transfer acceptance message from the one of the one or more other nodes accepting the transfer request to become a new home node, or receiving a transfer denied message from the one of the one or more other nodes denying the transfer request to refuse to become a new home node.

Optionally, in any of the preceding aspects, the home node maintains information of the content including at least one of content name, number of content producers, content producers location, a path to reach the content producer or a distance between the home node and the content producer.

Optionally, in any of the preceding aspects, the method further including receiving, by the node, an interest message from a first of the one or more other nodes; and selecting, by the node one or more content producers to fetch content requested in the interest message.

Optionally, in any of the preceding aspects, the method further including requesting, by the node, contextual information from the one or more content producers; and locally storing, the node, the contextual information and the content from the one or more content producers.

Optionally, in any of the preceding aspects, the metric for paths is a time metric or a distance metric.

Optionally, in any of the preceding aspects, further including managing, by the node, content of the one or more other nodes in a neighborhood of the network.

According to one aspect of the present disclosure, there is provided a node for accessing content in a network, including a memory storage comprising instructions; and one or more processors coupled to the memory that execute the instructions to: receive, by the node, content published from one or more content producers in the network, wherein the node comprises sufficient storage and processing capability to store and process the content received; determine whether the node can receive additional content that is published for one or more other nodes in the network; calculate a metric for paths from the node to each of the one or more content producers in the network in response to determining that additional content can be received by the node; and classify the node as a home node in the network in response to determining that the metric for paths of the node to the one or more content producers is shorter than a metric for paths of each of the one or more other nodes in the network to the one or more content producers, wherein the home node is configured to provide the additional content to the one or more other nodes in the network.

According to one aspect of the present disclosure, there is provided a home node in a network including a plurality of nodes, the home node includes a memory storage comprising instructions; and one or more processors coupled to the memory that execute the instructions to select one of the one or more content producers based on criteria received in a client request; forward the client request to the selected one of the one or more content producers; receive and locally store content and contextual information from the selected one or more content producers in the network; and determine whether to adjust the home node or to change the home node to another one of the plurality of nodes in the network.

Optionally, the one or more processors coupled to the memory further execute the instructions to calculate a total distance between the home node and the one or more content producers in the network; and determining whether to adjust the home node or change the home node to the another one of the plurality of nodes based on the calculated total distance of the home node being longer than a total distance corresponding to the another one of the plurality of nodes.

Optionally, the one or more processors coupled to the memory further execute the instructions to propagate the contextual information of the one or more content producers only to the home node.

Optionally, the one or more processors coupled to the memory further execute the instructions to transmit a transfer request to the another one of the plurality of nodes, including content name for the content stored in the home node; and receive a transfer acceptance message from the another one of the plurality of nodes accepting the transfer request to become a new home node, or receiving a transfer denied message from the another one of the plurality of nodes denying the transfer request to refuse to become a new home node.

Optionally, the memory storage includes at least one of a content store caching the context information, a forwarding information base (FIB) storing routing entries, and a pending interest table (PIT) recording information received in the client request.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

Aspects of the present disclosure are illustrated by way of example and are not limited by the accompanying figures for which like references indicate like elements.
FIG. 1 illustrates a network architecture to provide content as requested by different users in an information centric network.
FIG. 2A illustrates an example of a network in which a home node is selected according to the disclosed technology.
FIG. 2B illustrates an example home node in accordance with an embodiment of the disclosed technology.
FIG. 2C illustrates a table of home node characteristics and benefits.
FIG. 3 illustrates a flow diagram for home node classification of published content.
FIG. 4 illustrates a message flow diagram in accordance with FIGS. 2 and 3.
FIG. 5 illustrates an example of a home node receiving a client request message.
FIG. 6 illustrates a flow diagram of a new content producer being added to the network.
FIGS. 7 and 8 illustrate examples of a new content producer being added to the network in accordance with the process of FIG. 6.
FIGS. 9A and 9B respectively illustrate flow diagrams of a content producer and a home node being removed from the network.
FIG. 10 illustrates an example of a content producer disappearing from the network.
FIG. 11 illustrates an example of a home node disconnecting from the network.
FIGS. 12A - 12D illustrate propagating update messages using various mechanisms.
FIGS. 13 and 14 illustrate graphs for update message overhead.
FIG. 15 illustrates anode for use in accordance with the disclosed embodiments.
FIG. 16 illustrates a block diagram of a network system that can be used to implement various embodiments.

### DETAILED DESCRIPTION

The disclosure relates to classifying and selecting a network node as a home node in a network. Instead of employing traditional name resolution overlay servers in a network, the routers of the network can provide the capability and functionality to maintain information about content producers and content produced and published by the content producers. In particular, a node (referred to herein as the home node) is selected, such that the home node becomes aware of the existence of content producers, including their content and context information, connected in the network. Accordingly, the context information of the content producers is propagated to the home node, which acts as a virtual host of the content to each of the other nodes in the network (or a specified neighborhood of nodes). Thus, the other nodes may interface with the home node to reach the content.

In one embodiment, this is accomplished by determining whether the home node has sufficient storage and processing capability in serving as the home node of the content, whether the home node has been serving other content and cannot accept additional content due to size limitations and/or the home node is capable of reaching each of the content producers within a metric for paths from the home node to each of the content producers that is shorter than a metric for the paths to each of the other nodes in the network. A metric may be defined as any standard of measurement, such as time, distance, etc., and may also be represented as a mathematical function or the like. A metric may also be or influenced by other factors such as network bandwidth or other well-known network factors.

It is understood that the present disclosure may be embodied in many different forms and should not be construed as being limited to the embodiments set forth herein. Rather, these embodiments are provided so that this disclosure will be thorough and complete and will fully convey the invention to those skilled in the art. Furthermore, in the following detailed description of the present disclosure, numerous specific details are set forth in order to provide a thorough understanding of the present disclosure. However, it will be clear to those of ordinary skill in the art that the present disclosure may be practiced without such specific details.

Information-Centric Networking (ICN) has emerged as a promising candidate for the architecture of the future Internet, as well as the future Internet of Things (IoT). Different from conventional IP routers, ICN routers may combine content routing, content computing power, and content local cache/storage capabilities. Achieving reliable and secure content distribution may be a challenge in ICN, such as when users have some control over content distribution.

In some ICN models, such as content centric network (CCN)/named data networking (NDN) models, a content name (e.g., a prefix) may be used for content routing, which may define the content reachability to guide content retrieval from ICN routers. Internet routing protocols, such as Open Shortest Path First (OSPF) and Border Gateway Protocol (BGP), in some instances may be extended to populate content prefix to every ICN router (e.g., within a network, domain, or group) for such content routing.

Content generally includes any kind of text, audio or visual information or message that is produced by a content provider or content producer, distributor, vendor, etc. Examples include content that is distributed into our homes via output devices such as televisions (with or without set-top boxes), radios, computer networks (e.g., the Internet), and the like. Other examples include content that is distributed into our everyday routine via portable devices such as pagers, personal digital assistants (PDAs), wireless telephones (e.g. cellular or satellite), tablets, laptops and the like. Content may be provided by a component, such as a sensor providing a temperature reading, or an entity, such as a film studio providing a movie. It is appreciated that the above examples are non-limiting and that content may be provided according to any number of different methods, components and mechanisms.

ICN routing generally involves three procedures: (1) Name resolution, which consists of matching and translating a content name to locators of content producers/providers/sources; (2) Content request routing, which is responsible for routing a content request towards the provider either based on the name or the locator. The process of name resolution and content request routing can be combined. When combined, the content request is routed by name, such as in NDN/CCN. If not combined, the content request may be routed by the locator obtained from the previous name resolution step, such as in Data-Oriented Network Architecture (DONA), Publish Subscribe Internet Technology (PURSUIT), Scalable and Adaptive Internet Solutions (SAIL), MobilityFirst network architecture; and (3) Content delivery, in which a path is constructed for transferring the content from the provider to the requester. In the combined approach, the content provider provides the content to the requester by following the reverse path over which the content request was forwarded. When not combined, the content can be routed from the provider back to the request through an independent path.

The aforementioned name resolution process can either be separated from the message routing (e.g., routing of a content request message) as a standalone process or can be integrated (combined) with the message routing as a single process. The former is referred to as the standalone name resolution approach, and the latter is referred to as the name based routing approach. The standalone name resolution and the name based routing approaches resolve routing issues differently for various factors, as identified below:
- Update message overhead: The update message overhead is due to the change of content reachability, which may include content caching or expiration, content producer mobility, etc. In the name based routing approach, flooding part of the network for an update propagation may be necessary. For example, the name based routing approach may flood the entire network (with mitigating techniques used to scope the flooding). The standalone name resolution approach, on the other hand, requires an update propagation in part of a name resolution overlay.
   An overlay network is a network configured to co-exist with another (existing) network on the same hardware. An overlay network is a logical "overlay" on top of existing hardware networks. Each of the network devices connected to the overlay network are also connected to one or more existing hardware networks, such as existing local area networks and/or existing wide area networks. Such overlay networks may be implemented in any number of a variety of ways. The overlay network may therefore be considered a restricted subgroup of one or more other networks.
- Resolution capability: The standalone name resolution approach may provide the resolution of any content in the network if it is registered to the name resolution overlay (assuming the content is being broadcast in the overlay after it is registered). On the other hand, the name based routing approach can provide a high probability of content resolution, depending on the flooding scope of the content availability information (i.e., content publishing message and name based routing table).
- Node failure impact: Nodes involved in the standalone name resolution approach are the name resolution overlay servers (e.g., resolution handlers in DONA), while the nodes involved in the name based routing approach are routers which route messages based on locally maintained name based routing tables (e.g., NDN routers). Node failures in the standalone name resolution approach may cause some content resolution to fail even though the content is available. This problem does not exist in the name based routing approach since other alternative paths can be discovered to bypass the failed routers (where network is still connected).
- Storage usage: The standalone name resolution approach typically needs to maintain two databases-- a name to locator mapping in the name resolution overlay and routing tables in the routers on the data forwarding plane. The name based routing approach, on the other hand, maintains different databases-- a name routing table and optional breadcrumbs for reverse routing of content back to the requester.

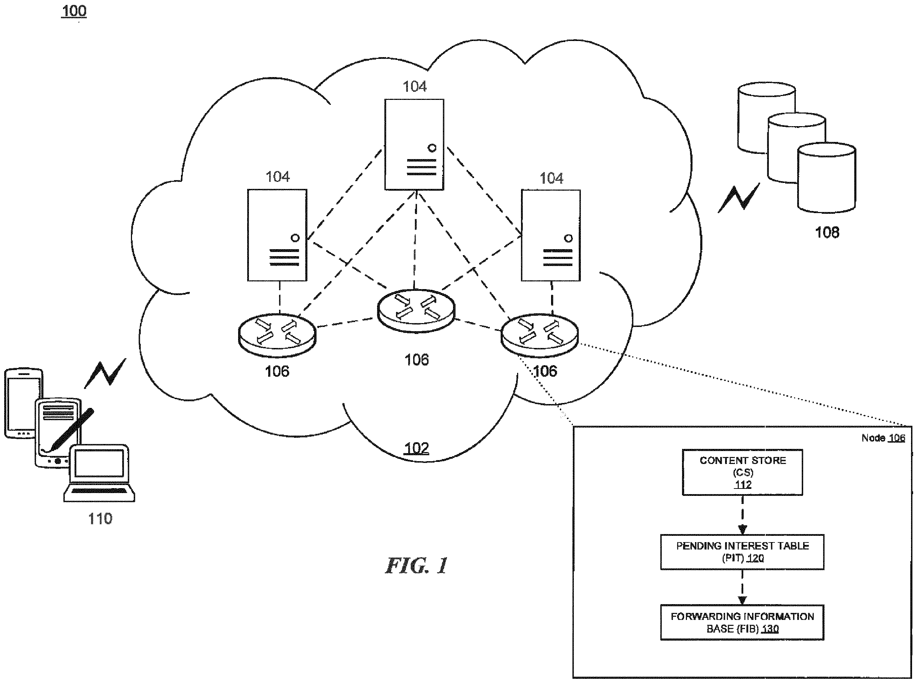

FIG. 1 illustrates a network architecture to provide content as requested by different users in an information centric network. The network environment 100 may include the ICN 102 having controllers, such as ICN managers 104. The ICN managers 104 may be, for example, a network entity that may have control over a set of network resources in a data plane. In one embodiment, the ICN managers 104 maintain a synchronized record of content hosted by different network entities in the ICN 102. For example, the ICN functionalities may include ICN name resolution, routing, and management. The ICN managers 104 may be deployed in a distributed or in a centralized or in a hybrid manner depending upon the Internet Service Providers (ISP).

ICN 102 may also include routers (or nodes) 106, which may include storage to cache content as it propagates through the ICN 102. The routers 106 may also be communicatively coupled with the ICN managers 104 and may be configured to process requests received from users for accessing the content via user devices 110, such as a mobile device or computer.

The routers 106 may collaborate for caching content with one or more other routers 106 in the network, such as an ICN, which may be configured as follows. A router 106 may comprise a content store (CS) 112, pending interest table (PIT) 120, and forwarding information base (FIB) 130. The CS 112 may be used (e.g., in a storage or memory unit) to cache (for relatively short time) or store (for relatively longer time) content data. The CS 112 may also receive and associate interests (user requests for content) with corresponding content data (requested content).

The PIT 120 may be any data structure (e.g., a table, list, or database) used to record and keep track of the received interests (requests for content) that are being served or pending (until the corresponding requested content data is received). The interests may be associated in the PIT 120 with the next hops (or next hop interfaces or faces) of the collaborative caching router 106 on which the interests were received.

The FIB 130 may be any data structure (e.g., a table, list, or database) used to associate content with corresponding ports or faces (for next hops) on which the interests and content data are received and forwarded. The FIB 130 entries may indicate the next hops on which content (interests and data) may be forwarded. The FIB 130 may be a data structure or a sub-data structure (e.g. a data structure within a data structure, such as a table, list, or database which may be maintained and operated (to process content interest and data) at a data plane or forwarding plane. The data plane may comprise operations for transferring content information (interest and data) in the CON, and the control plane may comprise operations related to controlling network operations including the data plane operations. The data structures above may be stored and maintained in a storage or memory unit of the router 106.

To carry out the Interest and Data packet forwarding functions, the router 106 maintains the three data structures described above, namely: (1) a CS 112 acting as a temporary cache of Data packets the router has received, which cached Data packets may be used to satisfy future Interests; (2) a PIT 120 to store all the Interests that a router has forwarded but not satisfied yet, where each PIT entry records the data name carried in the Interest, together with its incoming and outgoing interface(s); and (3) a FIB 130 as a routing table which maps name components to interfaces, and is populated by a name-prefix based routing protocol, and can have multiple output interfaces for each prefix. Additionally, the router 106 may include forwarding policies and rules to handle forwarding of packets.

In one example embodiment, when the router 106 receives an Interest packet (incoming interest), which includes for example the name of the content that the requester (client) wants to request, the router 106 first checks to determine if there is a locally cached copy of the content in the CS 112. If a locally cached copy of the content exists in the CS 112, the router 106 can reply to the Interest by sending the content copy to the incoming face of the Interest.

If no locally cached copy of the content exists, the content router 106 checks to determine if there are pending interests in the PIT 120 with the same content name. If the same Interest exists and is pending, then the incoming face of the new Interest is added to the face list for the content name in the PIT 120. Accordingly, the new interest is no longer required to be forwarded.

Otherwise, the router 106 forwards the Interest by performing a lookup, such as a longest-match lookup, in the FIB 130 based on the content name. The Interest is then stored in the PIT 120. If no matched entry is maintained in the FIB 130, then the Interest is forwarded to the faces of other routers 106.

The network environment 100 may further include stores 108, which may store the content or collections of content, such as files, images, videos, and the like. Accordingly, the managers 104 and the routers 106 may communicate with the data stores 108 to provide the content to different users. Additionally, the network environment 100 may include one or more user devices 110, including for example and without limitation, desktop computers, hand-held devices, laptops or other portable computers, network computers, mobile phones, landline phones, and the like.

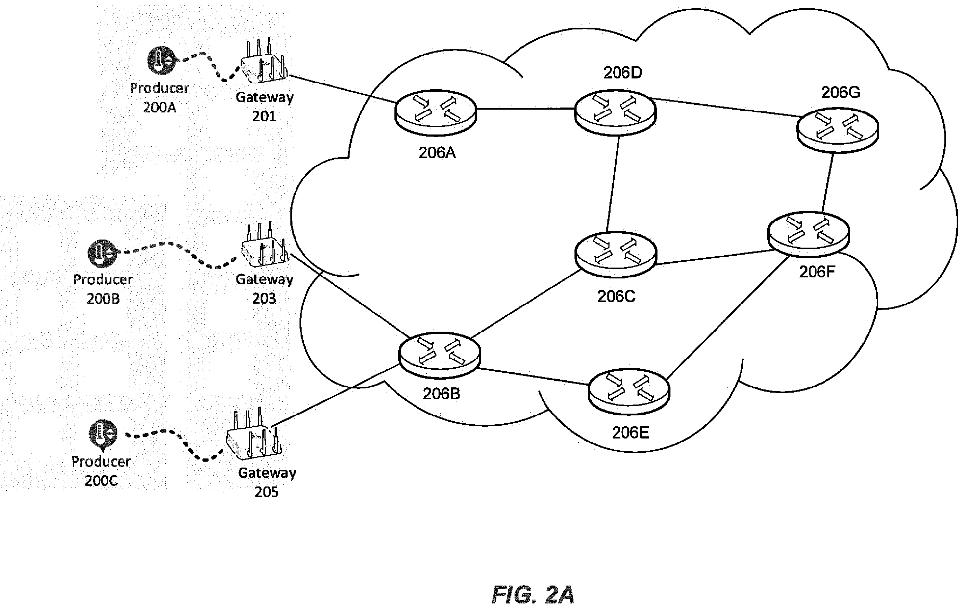

FIG. 2A illustrates an example of a network in which a home node is selected according to the disclosed technology. As depicted, the network includes content producers 200A, 200B and 200C, gateways 201, 203 and 205, and routers (or nodes) 206A-206G.

Content being distributed within the network may be produced by one or more content producers 200A - 200C (collectively, content producers 200). This is particularly common in Internet-of-Things (IoT) applications, in which the content producers 200 are likely to be located within the same neighborhood of the network. Neighborhood, as the term is used in this application, is defined as any number of content producers, gateways and/or routers in the network that are being served by the same node (e.g., a home node). Thus, the neighborhood may be the entire network (for example, in smaller networks), or may be a portion of or multiple portions of the network being serviced by the same home node (for example, in larger networks). It is also appreciated that the neighborhood may change or be modified as content producers, gateways and/or routers are added or removed from the network.

For example, content producers 200 may be temperature sensors deployed on different floors of an office building to sense individual floor temperature, as depicted in FIG. 2A. Thus, any one or more of the sensors may be the content producer 200 of temperature data in the building. In order for a name resolution overlay server to be able to return data from each of the content producers 200 providing content, or select the best content producer 200 based on a requesting client's criteria and context information, e.g. content producer with least load, content producer with least response time, etc., the following should be satisfied:
- In the standalone name resolution approach, the content producers' information, such as load, bandwidth, response time, location, etc., should be registered with the name resolution overlay server in the local domain. However, the name resolution overlay server may need to manage a large amount of information about all of the content in the local domain, which requires significant amounts of processing time and a tremendous amount of resources (e.g., CPU, storage etc.). Moreover, the name overlay server may become the single point of failure or a security risk.
- In the name based routing approach, the content producers' information is typically not maintained in the ICN routers. Thus, the ICN routers do not have the ability to select which of the content producers is best for a client based on its criteria and current contextual information. With a large amount of associated context information, excessive overhead and bandwidth would be required in transmitting and processing routing table propagation messages. Moreover, the ICN routers do not store the context information about the content producers themselves, such as the load, response time, etc.

As explained briefly above, in the disclosed technology, one of the nodes 206A-206G is designated to maintain the context information of the content producers 200. Such a node is termed the home node. In one embodiment, the context information is maintained (e.g., stored) at the home node for a group of content defined to be within a neighborhood. In another embodiment, the context information may be maintained at the home node for specific content producers 200, nodes 206A - 206G (collectively, nodes 206) and/or gateways in the network, which are distributed and selected based on the network. Thus, compared to the conventional standalone name resolution approach, the home node approach provides the capability of maintaining the context information of the content producers 200 in the network instead of the overlay nodes, which is much less vulnerable to the node failure.

In one other embodiment, the context information of the content producers 200 is propagated to the home node, which acts as a virtual host of the content to each of the other nodes 206 of the network. While the nodes 206 (aside from the home node) utilize the name-based routing approach, they only maintain an interface to reach the home node storing the content associated with each other node 206. Thus, a single host (i.e., the home node) exists for each of the other nodes 206. For example, if node 206C is the home node, then nodes 206A - 206B and 206D - 206G each have an interface to reach home node 206C. In this instance, any content request will eventually propagate to the home node. Such a mechanism significantly reduces the network bandwidth in propagating the context information for the entire network for content request routing.

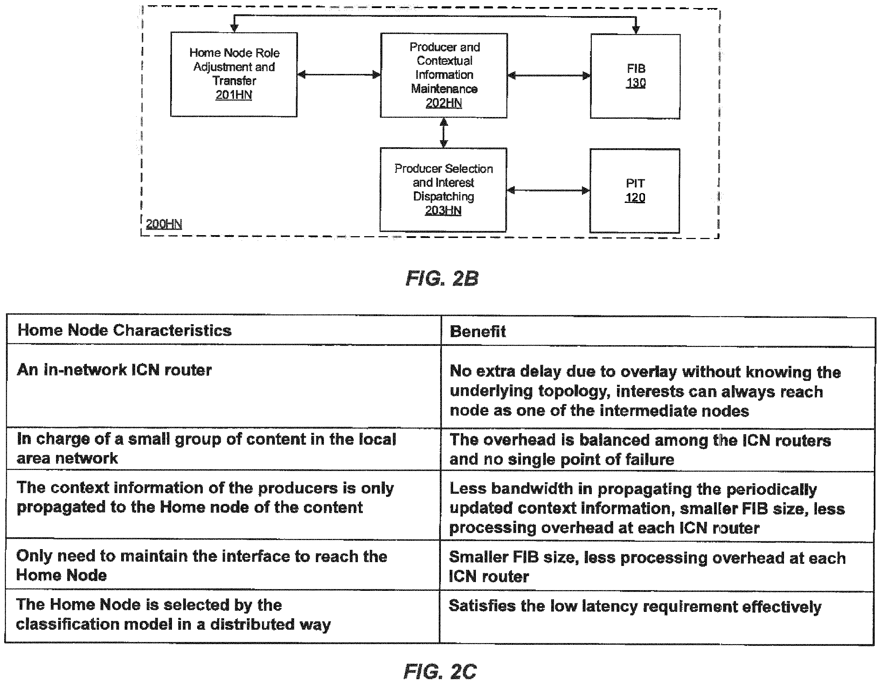

FIG. 2B illustrates an example home node in accordance with an embodiment of the disclosed technology, and FIG. 2C illustrates a table of home node characteristics and benefits. Home node 200HN includes several components, such as a home node role adjustment and transfer 201HN, a producer and contextual information maintenance 202HN, a producer selection and interest dispatching 203HN, FIB 130 and PIT 120. As explained in the table of FIG. 2C, the home node 200HN has several characteristics including, but limited to, in-network ICN routers, responsible for a group of content in an local area network, receiving and maintaining context information of the content producers, an interface to be reached and the ability to be selected using a classification model, as described below.

The home node role adjustment and transfer 201HN is responsible for determining when a home node requires adjustment (e.g., another content producer is added to the network) or should be transferred to another node in the network (e.g., another node should be assigned as the home node).

The producer and contextual information maintenance 202HN maintains the contextual information about each content producer in the network.

The producer selection and interest dispatching 203HN is responsible for selecting the content producer based on a requesting client's criteria and the producers' contextual information that is maintained locally at the home node, and is responsible for forwarding the request directly to the selected content producer.

In one embodiment, home node 200HN is node 106 of FIG. 1. Operational aspects and example embodiments of the home node are described in detail below.

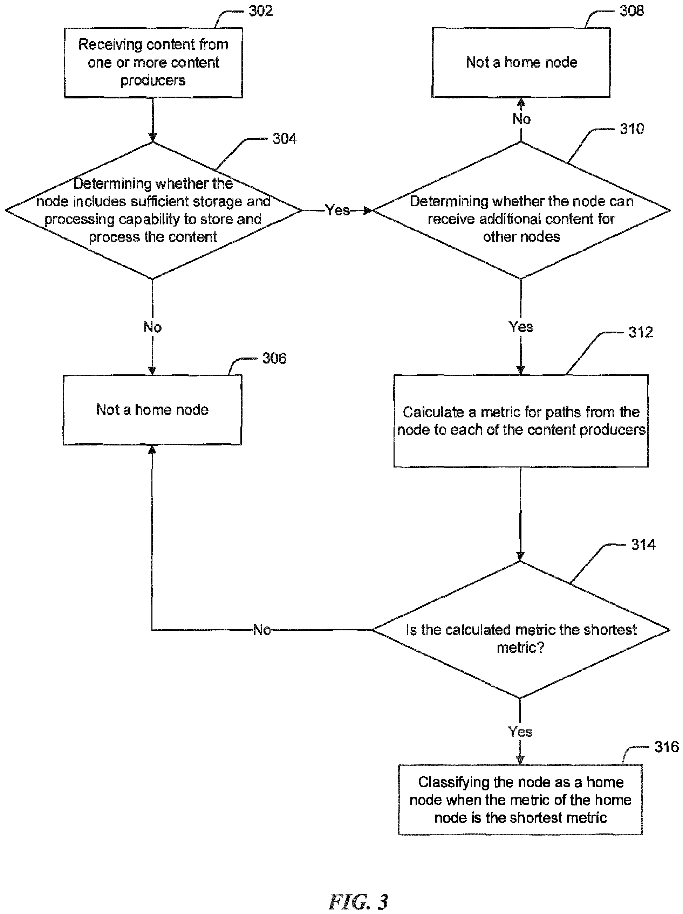

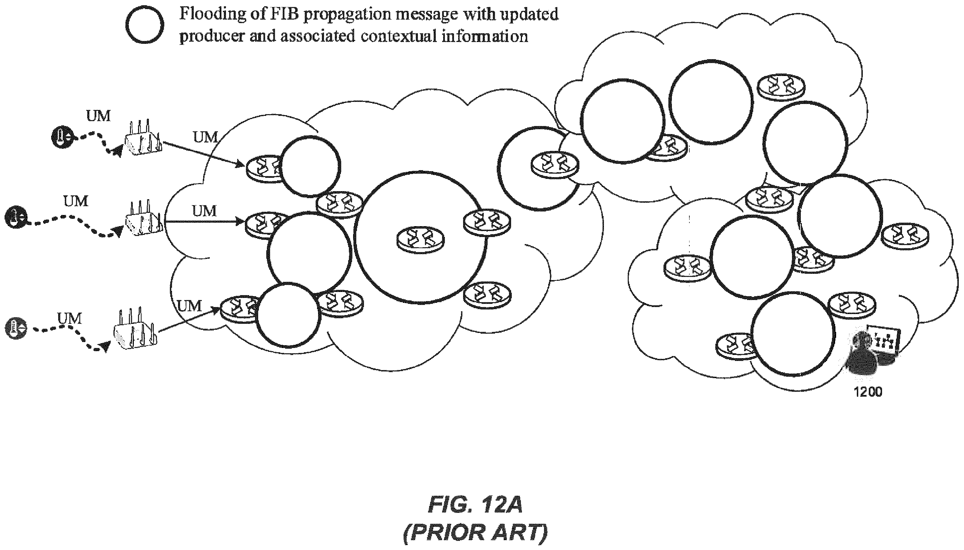

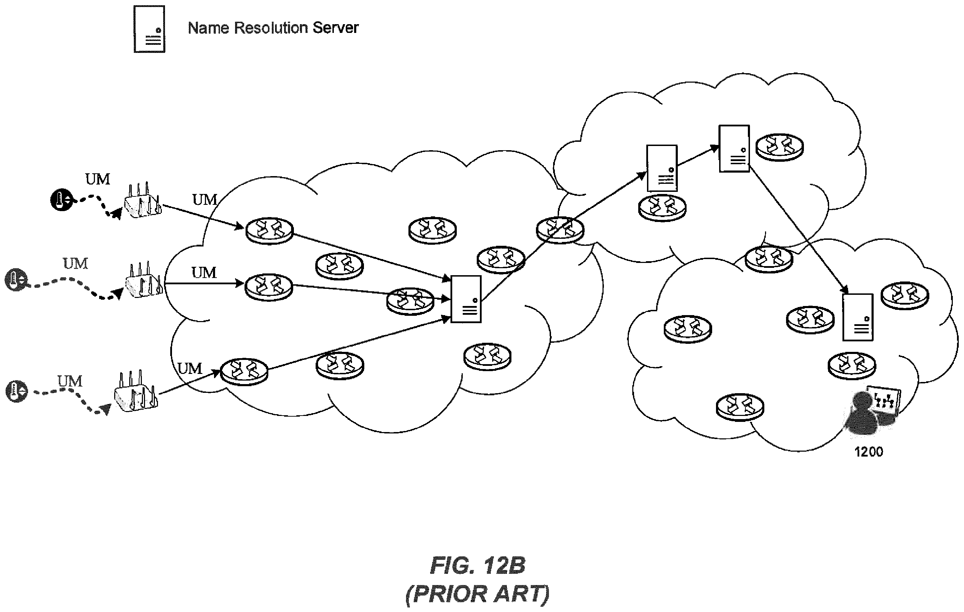

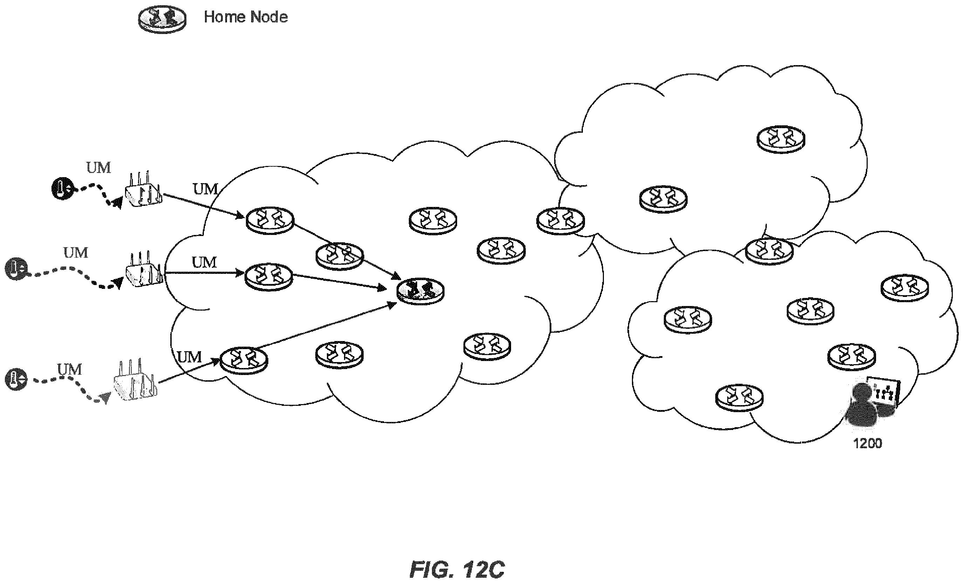

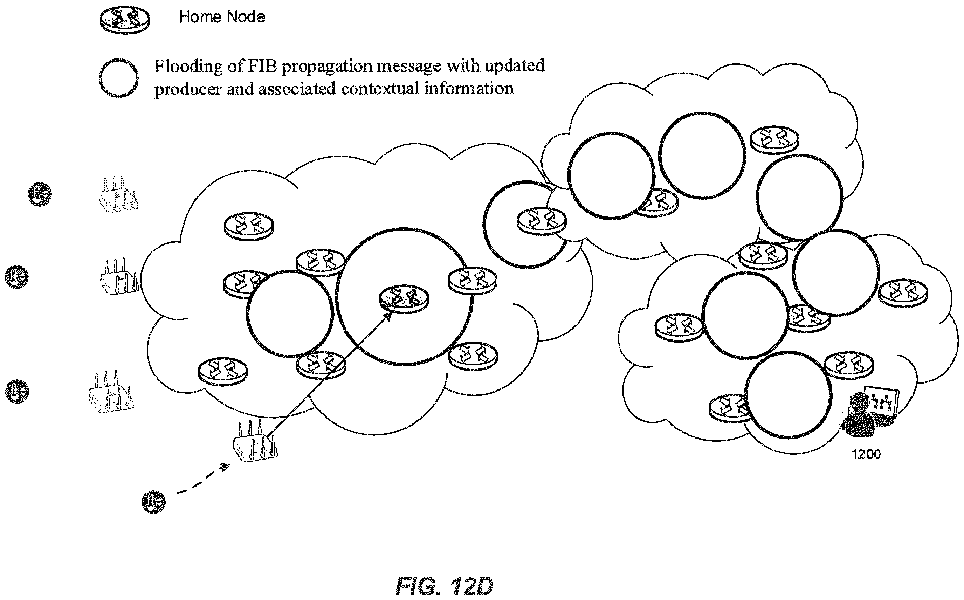

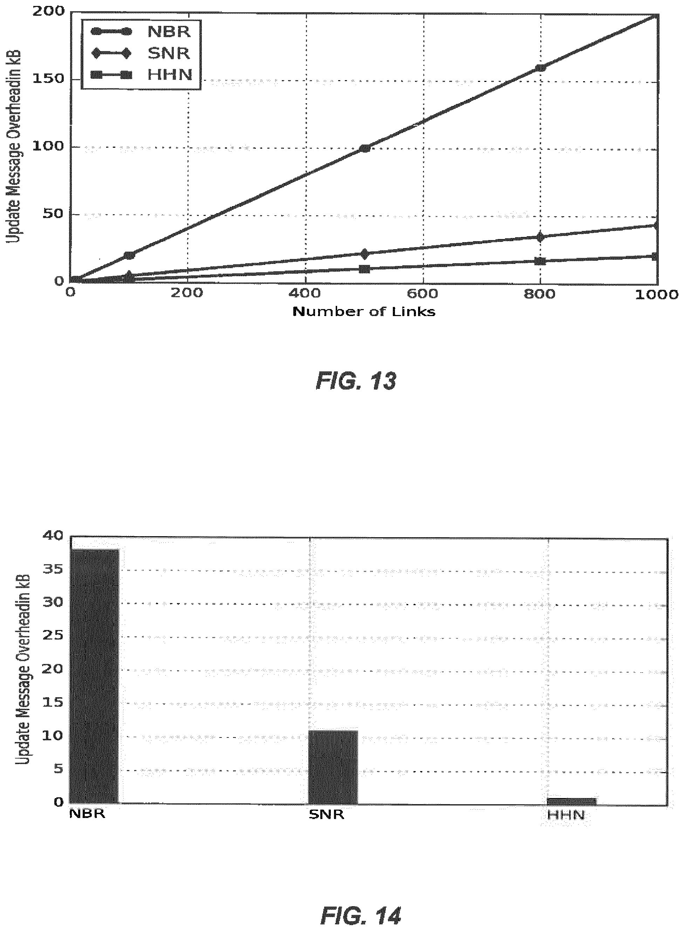

FIG. 3 illustrates a flow diagram for home node classification of published content. In the example embodiment that follows, the nodes of the network, individually or in a distributed manner (distributed processing system), implement the procedures below. That is, any node 206 in the system may implement the procedures below. For example, the nodes illustrated in FIGS. 12 and 14 may perform the procedures described herein. It is appreciated, however, that the implementation is not limited to the nodes in the network, and that any component connected to the network may be responsible for implementing the procedures.

Home node selection for content distribution may occur in an automatic and distributed manner, in which the home node is aware of and responsible for nodes in the network. The home node maintains content from the content producers for which it is responsible, and may be adjusted when a new producer is added to or removed from the network. When a home node failure occurs, the network may recover information stored in the home node before the failure, as well as select a new home node to maintain the information.

A network node, such as any one of nodes 206, may be classified in one of two classes for published content: (1) the node can be the home node; or (2) the node is not the home node.

In one embodiment, when a content producer 200 publishes content in the network, the home node may be classified and selected. Classification of the home node includes consideration of the following non-limiting factors: (1) whether the node has enough storage and processing capability to serve as a home node for the content; (2) whether the node has been serving other content and cannot accept additional content (e.g., the node has reached its storage or processing power limit); and (3) the node can reach each of the content producers of the content within the shortest path (such as shortest time or distance) among all other nodes in the neighborhood which are able to serve as a home node for the content.

In one embodiment, the metric is determined according to the time or distance to reach each of the content producers 200 by counting the total number of hops between a node 206 in the network and the content producers 200. The network bandwidth and/or other network factors may be taken into consideration to make the comparison more accurate, and may be used in lieu of determining a shortest distance or time it takes to traverse the path.

One non-limiting embodiment of classifying a home node is described with reference to the flow diagram of FIG. 3. At 302, any one or more of the nodes 206 in the network receive content from one or more of the content producers 200 in the network.

At 304, one of the nodes 206 determines whether any of the nodes 206 (including itself) in the network includes sufficient storage and processing capability to store and process the content. For purposes of discussion, the node will be referred to herein as the processing node 206. In one embodiment, more than one processing node 206 determines whether each of the other nodes 206 has sufficient storage and processing capability. In another embodiment, a controller (not shown) of the ICN may be responsible for making such a determination.

When analyzing a particular one of the other nodes 206, if it is determined by the processing node 206 that insufficient storage and processing capability exist, then the particular one of the other nodes 206 is determined not to be a home node at 306.

If sufficient storage and processing capability exist at the particular one of the nodes 206being analyzed, then the processing node 206 evaluates whether the particular one of the nodes 206 being analyzed can accept additional content at 310. If the particular one of the nodes 206 does not satisfy this requirement, then the particular one of the nodes 206 is ruled out as a home node at 308.

Otherwise, the processing node 206 continues to calculate whether the each of the other particular nodes 206 in the network can reach each of the content producers 200 within the shortest metric (e.g., shortest total path) at 312, examples of which follow below.

At 314, the processing node 206 determines whether the calculated metric is the shortest metric. For example, the processing node 206 determines whether a path from node 206C (FIG. 2A) to each of the content producers 200A - 200C is the shortest total path compared to each of the other nodes 206A, 206B and 206D - 206G. If the processing node 206 determines that the calculated metric for the particular node 206 being analyzed is not the shortest metric (e.g., shortest total path), then the particular node 206 is not classified as a home node at 306.

If the particular node 206 being analyzed can reach each of the content producers 200 within the shortest metric (e.g., shortest total path), then the particular node 206 being analyzed is classified as the home node at 316. As discussed further below, the classification of the node as the home node may then be propagated to other nodes in the network, for example, using a node adjustment request message or other notification message.

As appreciated, to classify and select one of the nodes 206 as a home node, the nodes 206 require an understanding of the network topology (or at least the neighborhood or portion of the network in which the home node is being selected). Any well-known technique may be used to determine the network topology.

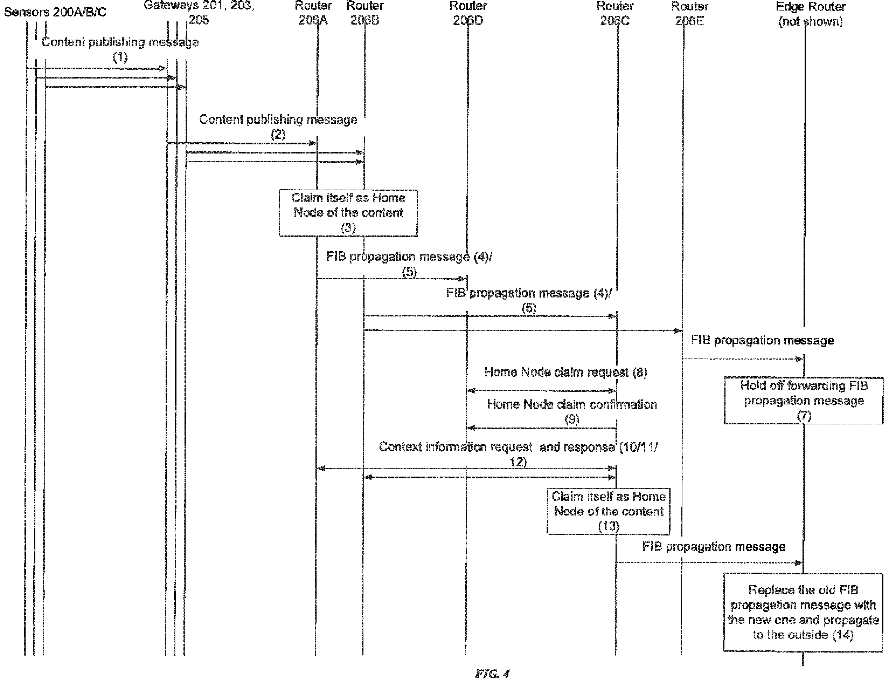

FIG. 4 illustrates a message flow diagram in accordance with FIGS. 2C and 3. In the depicted example, it is assumed for purposes of discussion that the content producers 200 (in this example, three sensors 200A/B/C) become active at the same time. That is, the content producers 200 publish the content simultaneously. The example also assumes for purposes of discussion that the propagation time and processing time at each node 206 (in this example, routers 206A-E) is approximately the same. The following procedures occur at each of the consecutive time slots after the content producers 200 have been activated and begin publishing content. It is appreciated that the procedures are not limited to the specific time order disclosed in the example.

Time Slot (1): The sensors 200A, 200B and 200C send a content publishing message to attached gateways 201, 203, 205, respectively, which may include the name of the content (e.g., temperature.buidling1) and the context information (e.g. the sleeping schedule of the producer, the remaining power of the producer, etc.).

Time Slot (2): The gateway 201 forwards the content publishing message to the attached router 206A, which also maintains a record of the content locally. The gateways 203 and 205 forward respective content publishing messages to the attached router 206B, which also maintains a record of the content locally.

Time Slot (3): The router 206A claims itself as a home node. At this stage, router 206A is aware of a single content producer (sensor 200A) and thus declares itself as the home node (here, it is assumed that the node satisfies the classification and selection requirements for being a home node of the sensor 200A), as described above. The router 206A, as the presumptive home node of the content, extracts the context information from the content publishing message and locally stores the information in a database. The router 206A also adds a new entry for the content name received from the sensor 200A in the FIB 130, the forwarding face is set to be the face that reaches itself (e.g., the router faces itself since it is the home node), and the distance is set to be 0 (i.e., the number of hops to reach itself).

Similarly, the router 200B also claims itself as the home node of the content, since it is aware of the two sensors 200B and 200C, each attached to router 200B. The router 200B, as the presumptive home node of the content, extracts the context information from the content publishing messages, and locally stores the information in its database. The router 200B also adds a new entry for the content name in the FIB 130, the forwarding face is set to be the face that reaches itself, and the distance is set to be 0.

Time Slot (4): The router 206A constructs a FIB propagation message that includes the new entry of the content, and broadcasts the FIB propagation message to neighboring nodes (in this example, router 206D). Similarly, the router 206B constructs the FIB propagation message that includes the new entry of the content, and broadcasts the FIB propagation message to neighboring nodes (in this example, routers 206C and 206E).

Time Slot (5): The router 206D receives the FIB propagation message from the router 206A, and determines that the content being received is new. Accordingly, the router 206D adds an entry in the FIB 130 for the content name of the received content, the forwarding face is set to be the face towards the router 206A, and the distance is set to be 1. Similarly the router 206C and router 206E also adds an entry in the FIB for the content name of the content, the forwarding face is set to be the face towards the router 206B, and distance is set to be 1.

Time Slot (6), not illustrated: The router 206D constructs the FIB propagation message that includes the new entry of the content, which is then broadcast to neighboring nodes not having previously sent the message (in this case, router 206C and router 206G). The router 206C constructs the FIB propagation message that includes the new entry of the content, and the message is broadcast to neighboring nodes (in this case, router 206D and router 206F). The router 206E constructs the FIB propagation message that includes the new entry of the content, and the message is broadcast to neighboring nodes not having previously sent the message (in this case, the router 206F).

Time Slot (7), partially illustrated: The router 206C receives the FIB propagation message from the router 206D, and realizes that there is another home node of the content existing in the network (in this case, router 206A that is 2 hops away). Similarly, the router 206D receives the FIB propagation message from the router 206C, and realizes that there is another home node of the content existing in the network (in this case, router 206B that is 2 hops away).

The routers 206F and 206G may then further propagate the published content in the network. In one embodiment, when the FIB propagation message reaches the edge node of the local area network, the edge node will hold off for a predetermined or random number of time slots before further propagating outside of the local area network. This ensures that more time is provided to the routers 206 to adjust and select the proper home node.

Time Slot (8): The routers 206C and 206D send a home node claim request message to each other (since each router has claimed itself as the home node). The home node claim request message is used by a router 206 to claim itself as the new home node of the content to a neighboring router 206 when it receives a FIB propagation message from the neighboring router 206 and finds new content producer(s) 200 of the content. The home node will become the common node on the paths towards each of the content producers 200.

Time Slot (9): In response to the home node claim request, the routers 206C and 206D, based on the procedures described with respect to FIG. 3, can classify and select which of the two nodes becomes the new home node. In this example, it is assumed for purposes of discussion that the router 206C becomes the new home node of the content as a result of implementing the procedures associated with FIG. 3. As a result, the router 206D will stop forwarding previously received FIB propagation messages as the entries will become outdated due to the home node selection/adjustment.

Time Slot (10): The router 206C sends a context information request to routers 206A and 206B (i.e., the original home nodes of the content based on the existing FIB entries in router 206D).

Time Slot (11): The context information request message reaches the router 206B. The router 206B returns the information (e.g., content) stored in the local database back to the requesting router 206C. Router 206B can optionally remove the context information associated with the content from local storage.

Time Slot (12): The context information request message reaches the router 206A. The router 206A returns the information (e.g., content) stored in the local database back to the requesting router 206C. Router 206A may then optionally remove the context information associated with the content from their local storage.

In one embodiment, the context information request message may collect the path information (of intermediate routers) between the new home node (in this case, router 206C) of the content and the old home node(s) (in this case, routers 206A and 206B). The returned information of the content from the old home node(s) may use the reverse path back to the new home node. The path information may also be piggybacked to the new home node, which will be recorded by the new home node for future home node adjustment, as described in more detail below.

Time Slot (13): The router 206C adds a new entry for the content name in the FIB, the forwarding face is set to be the face that reaches itself, and the distance is set to be 0. To each of the other nodes in the network, the router 206C is now the home node and the single host of the content. As a result, requests for the content will be forwarded to the router 206C until such time that the home node of the content is adjusted to another router.

Time Slot (14) and forward: The router 206C broadcasts the FIB propagation message, including the newly added entry. When the new FIB propagation message reaches the other nodes 206, the entry corresponding to the content name is updated in each of respective FIBs 130.

Information about the content that may be maintained by the home node includes the following non-limiting examples: content name, number of content producers, content producer's locator, the path to reach the content producer and the distance between the home node and the content producer, the context information of the content producer, such as the battery level, load, bandwidth, number of clients that can be afforded simultaneously, etc.

The messages that are involved in the procedures are summarized in TABLE 1 below, which also include other messages for home node adjustment and home node recovery, also discussed in more detail below.

**TABLE 1 Message Description**

| **Message Name** | **Description** |
|---|---|
| Content publishing message | The message is used by a producer of a content to publish the content to the attached gateway or router. A gateway can forward such message to its attached router. |
| FIB propagation message | The message is constructed by a router to propagate the new entry in FIB to neighbors, which may be forwarded even further in the local area network or the entire network. |
| Home Node claim request message | The message is used by a router to claim itself as the new Home Node of a content to a neighboring router when it receives a FIB propagation message from the neighboring router and finds new producer(s) of the content. The router is the common node on the paths towards all the producers of the content. |
| Home Node claim confirmation message | The message is used by a router to confirm its role of the new Home Node of a content to relevant neighbor. |
| Context information request message | The message is used for the new Home Node of a content to request the context information of the content stored in the old Home Node. |
| New producer notification message | The message is used for a router to notify the Home Node of a content about appearance of a new producer. The message does not need to include the context information of the new producer, which can be retrieved later after the Home Node is adjusted. |
| Producer deactivation notification message | The message is used for a gateway to notify the Home Node of a content about the deactivation of one of the content producers. |
| Home Node transfer request message | The message is used by a router to transfer its Home Node service to another router for a content or a group of content. |
| Home Node transfer acceptance message | The message is used by a router to confirm its acceptance as the new Home Node of a content to its old Home Node. |
| Home Node transfer decline message | The message is used by a router to decline to be the Home Node. |

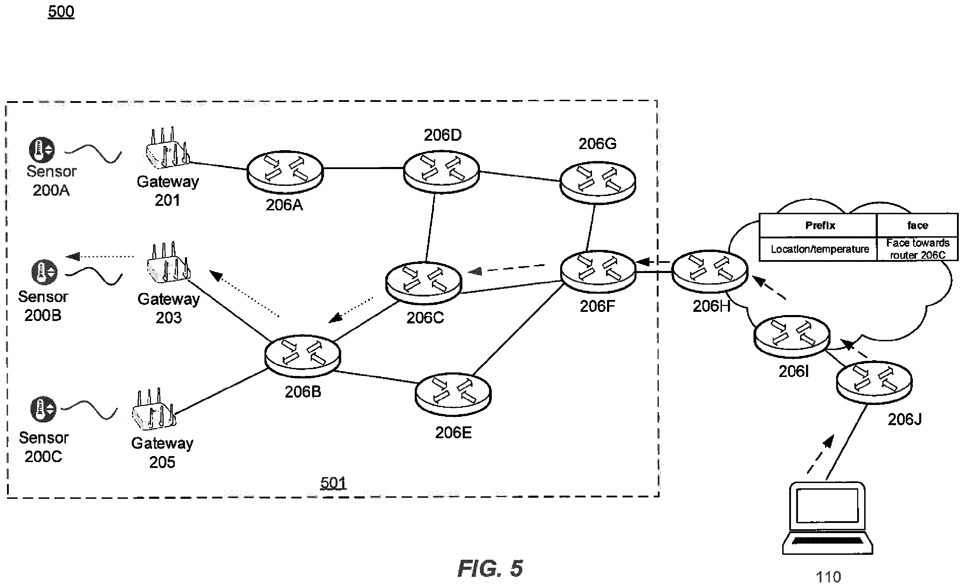

FIG. 5 illustrates an example of a home node receiving a client request message. As depicted, network 500 includes a neighborhood network 501, edge routers 206H and 2061, core routers 206J and client 110. The neighborhood network 501 includes sensors 200A, 200B and 200C (collectively sensors 200), gateways 201, 203 and 205 and routers (such as ICN routers) 206A-206F (collectively routers 206), with router 206C selected as the home node.

The process begins at client 110, where the client 110 sends an interest message (location/temperature) to the attached router (in this case, core router 206J). In the interest message, the client 110 requests content and may include criteria or conditions a content producer 200 should satisfy in order to meet the request, e.g. minimum distance, minimum response time, etc. This criteria/conditions are optional to the client 110 and do not require being included in the interest message. In one embodiment, if the criteria/conditions are not included, the home node 206C can determine which of the sensors 200 to serve the current interest based on various metrics, such as the sensor 200 which has the longest battery life, the least load, etc. In one embodiment, the information (context information) about the sensors 200 may be acquired by the home node 206C periodically from the sensors 200.

The interest message may be forwarded by the intermediate routers (including edge routers, core routers, etc.) 206F and 206H-206J to the home node 206C (face forwards router 206C) based on the FIB 130 stored in each router, which is shown by the dashed arrows in FIG. 5.

The home node 206C may then determine which of the sensors 200 is responsible for replying to the interest message. For example, the home node 206C maintains the relevant contextual information of the available sensors 200. The home node 206C, in this example, selects sensor 200B since it has the longest battery life (as determined form the context information stored in the home node 206C and provided by sensor 200B). The interest message may then be forwarded (based on the locator) to the sensor 200B, as shown by the dotted arrows in FIG. 5.

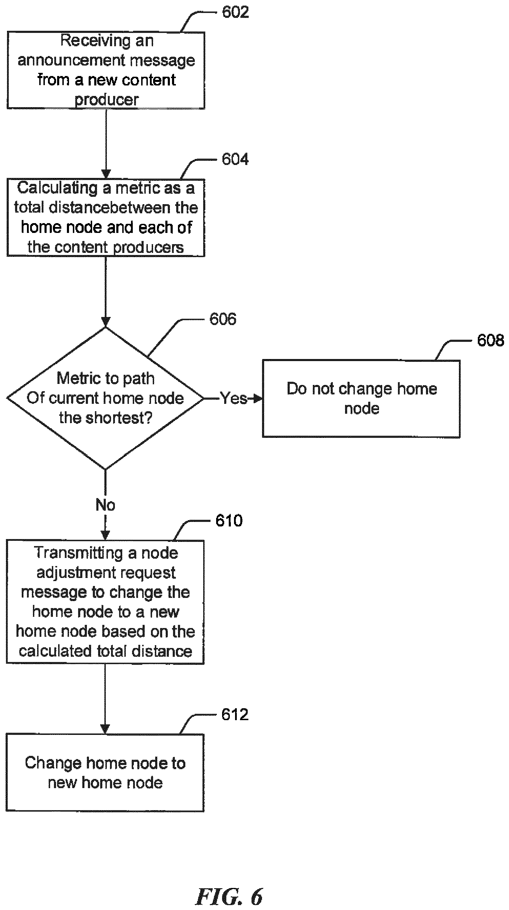

FIG. 6 illustrates a flow diagram of a new content producer being added to the network. The home node may need to be changed or adjusted among the routers 206 when a new producer is added to the network or an existing producer 200 disappears or is removed from the network 500 (FIG. 5). As explained above, the home node is selected, in part, to ensure the overall shortest metric (such as shortest network path (e.g., distance)) from each of the content producers 200.

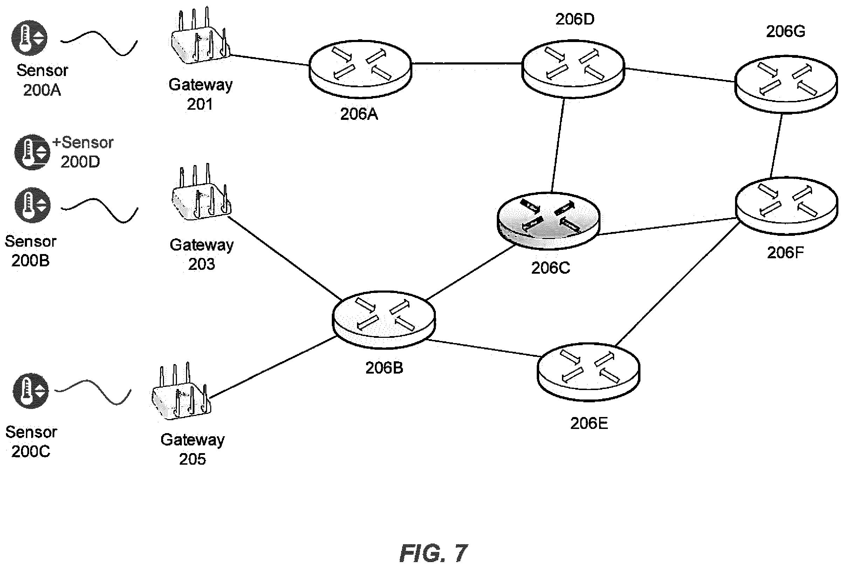

When a content producer 200 is added to the network (or appears as new, e.g., was previously added and lost communication but is now back in communication, such as reinitiating content publication or linking up with the network after being deactivated), an announcement message is sent by the content producer 200 to the attached node (e.g., a gateway). In one embodiment, the announcement message is a new producer notification message (Table 1), and may be in the form of an interest message. At 602, the announcement message is received at the attached node (e.g., gateway 203; FIG. 7) from the new content producer (e.g., sensor 200D, FIG. 7). The details of FIG. 7 are described below in more detail.

At 604, the metric (e.g., distance metric) is calculated between the home node and each of the content producers 200, including the new content producer, in the network. At 606, it is determined whether the distance metric for the path to the current home node remains the shortest distance metric for the path. If the total distance is still the shortest distance metric for path, then the home node is not changed or adjusted at 608.

If the total distance metric for the path to the current home node is no longer the shortest distance metric for the path compared to the total distance metric for the path to each of the other nodes in the network, a node adjustment request message is transmitted from the current home node to change the home node to a new home node at 610. This may be based, for example, on the calculated distance metric for the path at 604. The home node may then be changed to the new home node at 612. Calculating the metric for the path and the comparison of the metric for the path of the current home node to each of the other nodes 206 is based on the calculations performed according to the embodiments described above with respect to FIGS. 3 and 4, and is explained further below with examples.

In one embodiment, changing or adjusting the home node may not be implemented if the resources or overhead necessary to accomplish the task, e.g. computation overhead, communication overhead among routers, etc., are prohibitive, e.g. cost too much, take too much time to implement, etc.

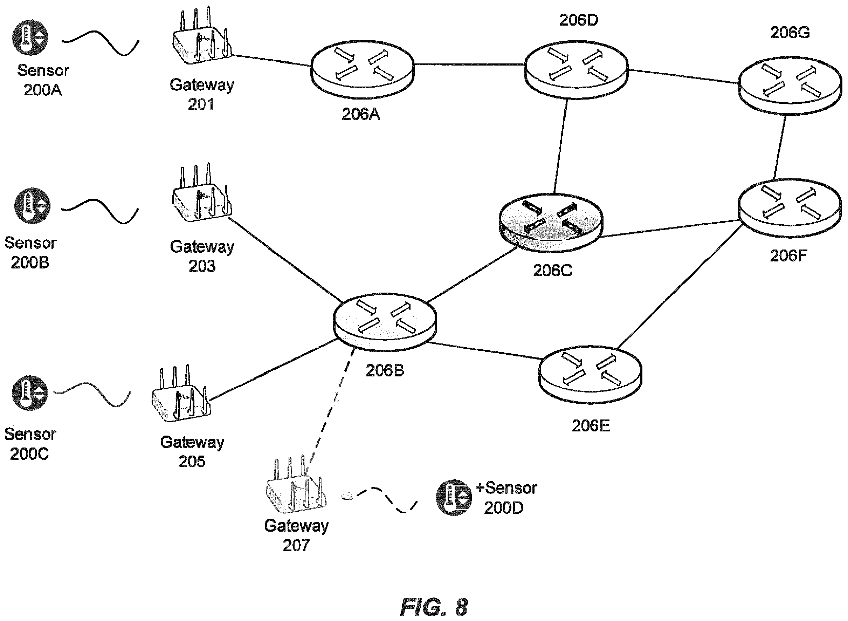

FIGS. 7 and 8 illustrate examples of a new content producer being added to the network in accordance with the process of FIG. 6. In the examples that follow, the network illustrated and described with reference to FIG. 5 is employed. In this case, the home node 206C routes the content of the nodes 206 from sensors 200 upon a request from client 110.

A new content producer 200 may appear and attach to a gateway 201, 203, 205 or node 206. In the example of FIG. 7, a new content producer (sensor) 200D shares the same attachment point as an existing content producer (sensor) 200B, which is attached to the gateway 203. In the example of FIG. 8, a new content producer (sensor) 200D attaches to a new gateway 207, which connects to the local area network via the node 200B. In both embodiments, router 206C is the home node. In either example, the following non-limiting and example procedures are performed by the distributed system (it is appreciated that the procedures are not limited to order presented):
- Procedure 1: The new content producer (in this example, sensor 200D) announces its appearance to the attached gateway 203 or 207 by a new content producer notification message, as shown in Table 1 above. The new content producer notification message can be sent, for example, as an interest message including a special field which represents the new content producer notification. The interest message may be forwarded towards the home node 206C in a manner similar to a conventional interest message. However, in one embodiment, the home node 206C processes the interest message and does not forward the interest message to any other nodes 206 in the network. As illustrated in FIG. 7, the sensor 200D notifies the gateway 203 (sharing the gateway with existing sensor 200B), while in FIG. 8 the sensor 200D notifies the gateway 207 (the sensor is attached to a new gateway).
- Procedure 2: The gateways 203 (FIG. 7) or 207 (FIG. 8) forward context information about the new content producer (sensors) to the connected node (router) 206B. In the examples of both FIGS. 7 and 8, the gateway 203 or 207 forwards the information to the router 206B.
- Procedure 3: The router 206B creates a new content producer notification message and forwards the message to the router 206C based on the FIB 130. In one embodiment, the new content producer notification message does not include the context information of the new content producer 200D, thereby reducing communication overhead.
- Procedure 4: When the new content producer notification message reaches the router 206C, the Router 206C calculates the metric for the path (e.g. the total distance) between itself to each of the content producers 200, including the new content produce 200D. Since the router 206C maintains records of the paths from itself to each of the content producers 200, the router 206C can determine that the router 206B has the shortest distance metric for the path to each of the content producers 200 in both FIGS. 7 and 8.
- Procedure 5: The router 206C sends a home node adjustment request message to the router 206B to adjust the home node of the content to the router 206B.
- Procedure 6: The router 206B accepts the home node adjustment request, and requests that the context information of the content producers 200 currently stored in home node 206C be moved to itself. In the event the new home router 206B already has a copy of the context information of the new content producer 200D, the context information does not require retrieval. For example, as described in the example of FIG. 4, two home nodes are created, each having access to the context information of the content producers. Otherwise, the new home router 206C retrieves the context information of the new content producer and updates the FIB entry for the content by pointing to itself.
- Procedure 7: The router 206B is triggered to broadcast a FIB propagation message to update the routers 206 in the network about the home node change for the content. In one embodiment, the FIB propagation message can be triggered when a sufficient number of changes have been acquired to thereby reduce the network bandwidth in transmitting the messages and the processing overhead of the routers in the network.

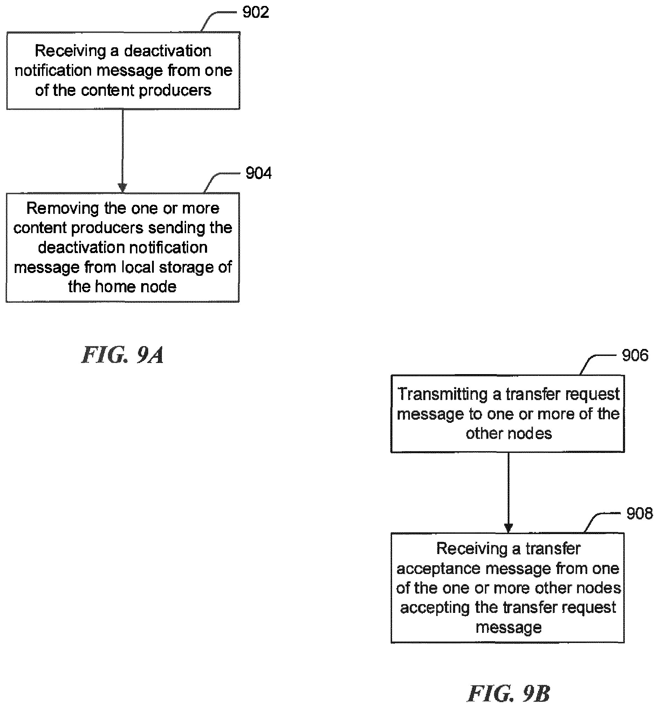

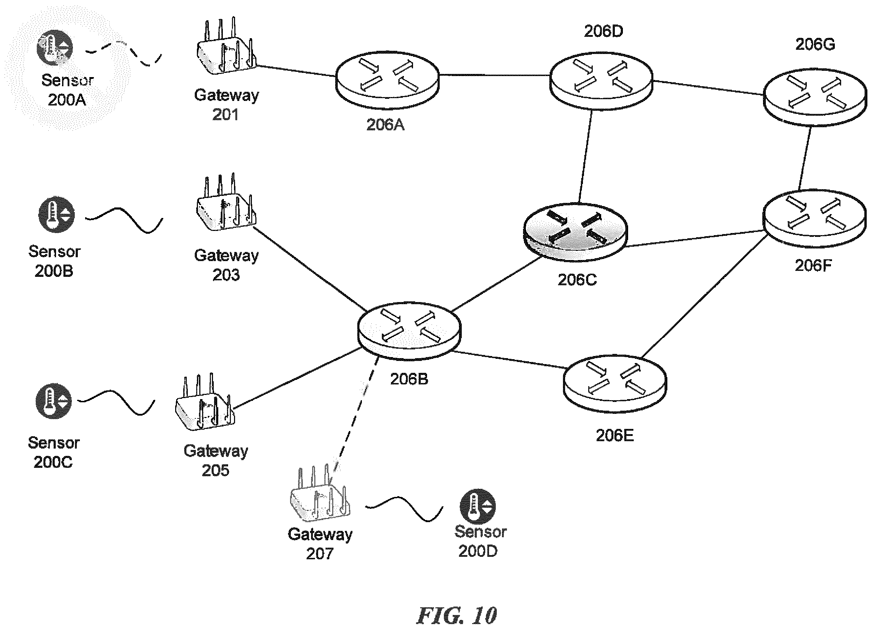

FIGS. 9A and 9B respectively illustrate flow diagrams of a content producer and a home node being removed from the network. With reference to FIG. 9A, one of the content producers 200 (e.g., sensor 200A) sends a deactivation notification message to the home node (in this example, 206B). The home node 206B receives the deactivation notification message at 902. In response to receiving the deactivation notification message, the home node 206B removes the sensor 200A responsible for sending the deactivation notification message from local storage at 904. An example of removing a content producer from the network is described below with reference to FIG. 10.

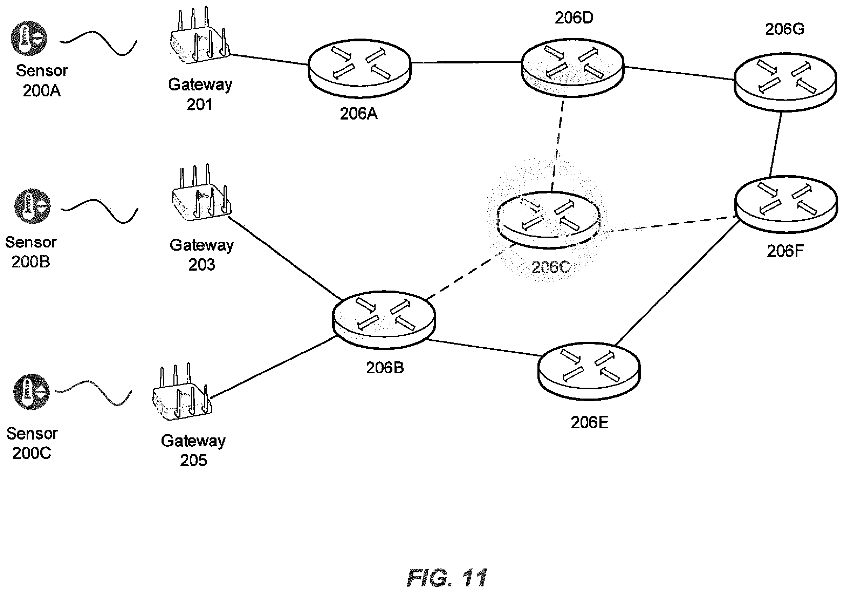

With reference to FIG. 9B, the home node 206B transmits a transfer request message to one or more of the routers 206 prior to disconnecting at 906. At 908, in response to receiving the transfer request message, one of the routers 206 sends a transfer acceptance message back to the home node accepting the transfer request message (in this example, and for purposes of discussion, the transfer request message is accepted by the node since it is assumed that the conditions noted above-i.e., sufficient storage and processing power, receive additional content for other nodes, etc.- are satisfied). The acceptance message is received by the home node 206B at 908. An example of a router, such as a home node, disconnecting from the network and a transfer acceptance/decline message from another router is described in more detail with reference to FIG. 11 below.

FIG. 10 illustrates an example of a content producer disappearing from the network. An existing content producer 200 may disappear from the network, for example, due to a battery outage, being disabled by the operator, etc. When a content producer disappears from the network, the current home node of the content should be notified and may be changed or adjusted. For example, as shown in the depicted example, sensor 200A as an existing content producer becomes deactivated, and thus no longer serves as a content producer. Prior to complete deactivation, the following procedures occur (it is appreciated that the procedures are not limited to the order presented):
- Procedure 1A: The sensor 200A (or its attached gateway 201) sends a content producer deactivation notification message, as shown in Table 1, to the home node (in this case, home node 206B). The deactivation notification message can be sent as an interest message, for example, with a special field which identifies the message as a content producer deactivation notification message. The message may be forwarded similar to a conventional interest message towards the home node 206B. In one embodiment, the home node 206B processes the message and does not forward the message to any other node in the network.
- Procedure 1B: The gateway 201 forwards the content producer deactivation notification message from the sensor 200A to the router 206A, which then forwards the message to the router 206D based on the stored FIB 130. The message is then forwarded by router 206D to router 206C and then to the home node 206B.
- Procedure 2: The home node 206B then removes the sensor 200A from its local database. In this example, the removal of the sensor 200A does not trigger a home node adjustment since the router 26B remains the best candidate for home node given the existing content producers: sensor 200B, sensor 200C and sensor 200D.

FIG. 11 illustrates an example of a home node disconnecting from the network. A router 206 may be disconnected from the network due to router failure, such as down time for maintenance, etc. In the example of FIG. 11, home node 206C becomes disconnected from the network.

For example, in accordance with FIG. 9A, the home node 206C disconnects from the network. Similar to the examples above, the home node 206C is the home node to content producers 200A, 200B and 200C. Prior to disconnecting from the network, the home node 206C selects a new home node for the content it serves. In this example, the home node 206C chooses one of direct neighbor routers 206D, 206B or 206F as the new home node.

In making the selection of a new home node, the current home node 206C needs to confirm that the content producers 200A, 200B and 200C are reachable by the (to be) newly selected home node. Selection may be based on a variety of factors, including router storage capacity, network bandwidth, etc. Once the new home node (in this case, router 206F) is selected by the current home node 206C, the information of the content is moved to the newly selected home node 206F before the current home node 206C is disconnected.

Following the process of FIG. 9B, the home node 206C sends a home node transfer request message to the newly requested home node 206F, which includes the content name. The newly requested home node 206F may accept the transfer request message by replying with a home node transfer acceptance message to the current home node 206C, as described above. If, on the other hand, the newly requested home node 206F does not agree to take on new or more content, for example due to its limited storage, the newly requested home node 206 can reply with a home node transfer decline message. That is, the if the newly requested node 206F determines that is fails to meet any one of the conditions noted above upon receipt of the transfer request message- i.e., sufficient storage and processing power, receive additional content for other nodes, etc.- then a transfer decline message is sent to the current home node 206C.

Subsequently, the current home node 206C can send the home node transfer request to the routers 206B or 206D until one of the routers accepts the request. In one embodiment, the current home node 206C performs the above procedures for each content it serves as the home node. Alternatively, the home node 206C may split content that it maintains into groups. Each group of the content may then be transferred to one or more of routers 206B, 206D and/or 206F (that is, more than one home node may exist for different groups of content or content producers).

FIGS. 12A - 12D illustrate update message propagation in various networks. The update message overhead in the illustrated networks may be due to the change of content reachability, which may include producer appearance or disappearance, the producer's contextual information updates, etc.

Fig. 12A illustrates propagation of an update message using a conventional name based routing (NBR) approach. In order for a client 1200 to properly resolve and reach the content in the network, the FIB propagation message with the updated producer and associated contextual information is flooded in the entire network. For example, update messages (UMs) are flooded from sensors to gateways to routers in the network, as depicted by the lines with arrows.

FIG. 12B illustrates propagation of an update message using a conventional name resolution (SNR) approach. As illustrated, the update messages are propagated in the name resolution server overlay.

Compared to the home node network approach described herein and illustrated in FIG. 12C, the UMs reach the home node, which will in turn update the FIB entry and keep the contextual information in the local database. If the UMs only contain the latest contextual information of the existing producers, the name based routing tables remain the same. Accordingly, no FIB propagation is required. On the other hand, FIG. 12D shows the FIB propagation message is flooded in the entire network when the new producer appears (or the old one disappears), which does not contain any contextual information.

FIGS. 13 and 14 illustrate graphs for update message overhead. In particular, FIG. 13 compares the update message overhead of the standalone name based routing (NBR), name resolution service (SNR) and home node (HHN) approaches when two new producers are added. The update message overhead (y-axis) versus the average number of links (x-axis) in the network is plotted for each of the three illustrated approaches. The number of links determines the flooding scope, i.e. the number of hops that a FIB propagation message is forwarded in the network. On the other hand, the number of links may also indicate the size of the network, given the average probability that two nodes are connected is the same for different network sizes.

In the name resolution service approach, for larger sized networks, the content publishing message with the two new producers' information will traverse the network with a largest number of hops in order to reach the name resolution overlay servers. The home node approach disclosed herein generates the smallest update message overhead compared to both the name resolution service and standalone name based routing approaches.

FIG. 14 shows the update message overhead of the three approaches due to the context information update of the existing producers. In this example, when the number of producers, the network size, the number of links in the network, and the number of hops to reach the furthest name resolution overlay server remain the same, the resulting update message overhead can be calculated. As illustrated, the home node (HHN) approach shows significantly less overhead compared to the standalone name based routing (NBR) and name resolution service (SNR) approaches, since the updated contextual information of the producers only needs to be sent to the home node, which is an in-network ICN router and has the smallest sum of distances from/to all the producers.

Although not illustrated, a comparison of the storage usage in each of the different approaches is discussed herein. In the name resolution service approach, two databases are typically maintained, namely the name to locator mapping in the name resolution overlay and routing tables in the routers on the data forwarding plane. Each router has to maintain the contextual information of all content in the network, because each router is in charge of selecting a forwarding face (producer selection is performed in the meantime) and routing of the interest message. Overall, this approach has the most duplication of information.

The standalone name based routing approach also maintains different databases, namely the name routing table and optional breadcrumbs for reverse routing of content back to the client. In order to properly selection a producer, either the name resolution servers in the standalone name resolution, or the routers in the name based resolution service are required to maintain the relevant context information of all the content in the storage additionally. Each server in the name resolution overlay server(s) needs to maintain one copy of the contextual information for quick producer selection in the client's local domain. Alternatively, one copy of the contextual information may be maintained in one of the name resolution servers (e.g. a server in the core network). However, this is likely to increase the latency experienced by the client and impose higher risk of name resolution and producer selection failure due to the single point failure at this server.

The home node approach, on the other hand, spreads the contextual information to the routers in the network without duplication, while still realizing the name resolution and producer selection function with the least latency. That is, the home node approach maintains one copy of the contextual information. Thus, each router in the network may be responsible for storing the context information for a small group of content in the network.

Node failure is also impacted differently between the three different approaches. Nodes employing in the standalone name resolution approach are the name resolution overlay servers, while the nodes employing the name based routing and home node approaches are routers which route messages based on the name based routing tables that are maintained locally. Node failures in the standalone name resolution approach may cause some content resolution to fail even though the content is available, whereas this issue does not exist in the name based routing and home node approaches as other alternative paths can be discovered to bypass the failed routers.

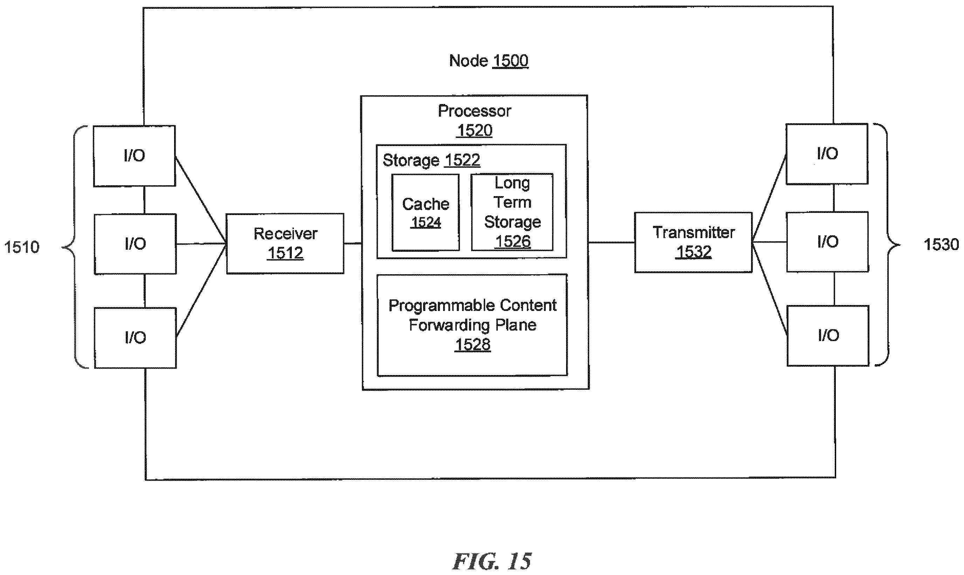

FIG. 15 illustrates an embodiment of a router in accordance with embodiments of the disclosure. The node (e.g., a router) 1500 may be, for example, the content router 106 (FIG. 1) or any other node or router as described above in the ICN. The node 1500 may comprise a plurality of input/output ports 1510/1530 and/or receivers (Rx) 1512 and transmitters (Tx) 1532 for receiving and transmitting data from other nodes, a processing system or processor 1520 (or content aware unit), including a storage 1522 and programmable content forwarding plane 1528, to process data and determine which node to send the data. The node 1500 may also receive Interest messages and data messages as described above. Although illustrated as a single processor, the processor 1520 is not so limited and may comprise multiple processors. The processor 1520 may be implemented as one or more central processing unit (CPU) chips, cores (e.g., a multi-core processor), field-programmable gate arrays (FPGAs), application specific integrated circuits (ASICs), and/or digital signal processors (DSPs), and/or may be part of one or more ASICs. The processor 1520 may be configured to implement any of the schemes described herein, such as the processes illustrated in FIGS. 3-4 and 9A/B, using any one or combination of steps described in the embodiments. Moreover, the processor 1520 may be implemented using hardware, software, or both.

The storage 1522 (or memory) may include cache 1524 and long-term storage 1226, and may be configured to store routing tables, forwarding tables, or other tables or information disclosed herein. Although illustrated as a single storage, storage 1522 may be implemented as a combination of read only memory (ROM), random access memory (RAM), or secondary storage (e.g., one or more disk drives or tape drives used for non-volatile storage of data).

The programmable content forwarding plane 1528 may be configured to implement content forwarding and processing functions, such as at an application layer or L3, where the content may be forwarded based on content name or prefix and possibly other content related information that maps the content to network traffic. Such mapping information may be maintained in one or more content tables (e.g., CS, PIT, FIB) at the processor 150. The programmable content forwarding plane 1528 may interpret user requests for content and accordingly fetch content, e.g., based on meta-data and/or content name (prefix), from the network or other content routers and may store the content, e.g., temporarily, in storage 1522. The programmable content forwarding plane 1528 may then forward the cached content to the user. The programmable content forwarding plane 1528 may be implemented using software, hardware, or both and may operate above the IP layer or L2.

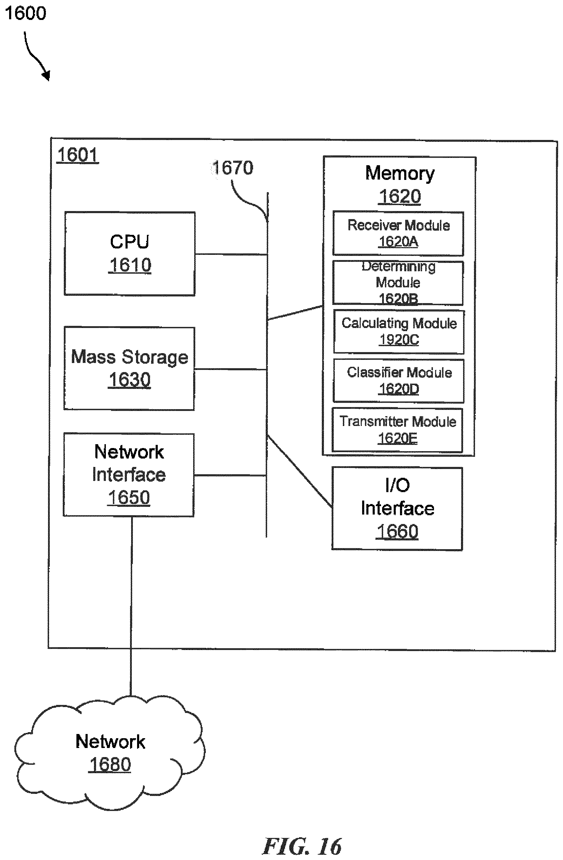

FIG. 16 is a block diagram of a network system that can be used to implement various embodiments. Specific devices may utilize all of the components shown, or only a subset of the components, and levels of integration may vary from device to device. Furthermore, a device may contain multiple instances of a component, such as multiple processing units, processors, memories, transmitters, receivers, etc. The network system may comprise a processing unit 801 equipped with one or more input/output devices, such as network interfaces, storage interfaces, and the like. The processing unit 1601 may include a central processing unit (CPU) 1610, a memory 1620, a mass storage device 1630, and an I/O interface 1660 connected to a bus. The bus may be one or more of any type of several bus architectures including a memory bus or memory controller, a peripheral bus or the like.

The CPU 1610 may comprise any type of electronic data processor. The memory 1620 may comprise any type of system memory such as static random access memory (SRAM), dynamic random access memory (DRAM), synchronous DRAM (SDRAM), read-only memory (ROM), a combination thereof, or the like. In an embodiment, the memory 1620 may include ROM for use at boot-up, and DRAM for program and data storage for use while executing programs. In embodiments, the memory 1620 is non-transitory. The mass storage device 1630 may comprise any type of storage device configured to store data, programs, and other information and to make the data, programs, and other information accessible via the bus. The mass storage device 1630 may comprise, for example, one or more of a solid state drive, hard disk drive, a magnetic disk drive, an optical disk drive, or the like.

The processing unit 1601 also includes one or more network interfaces 1650, which may comprise wired links, such as an Ethernet cable or the like, and/or wireless links to access nodes or one or more networks 1680. The network interface 1650 allows the processing unit 1601 to communicate with remote units via the networks 1680. For example, the network interface 1650 may provide wireless communication via one or more transmitters/transmit antennas and one or more receivers/receive antennas. In an embodiment, the processing unit 1601 is coupled to a local-area network or a wide-area network for data processing and communications with remote devices, such as other processing units, the Internet, remote storage facilities, or the like.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing can be constructed to implement one or more of the methods or functionalities as described herein, and a processor described herein may be used to support a virtual processing environment.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

For purposes of this document, each process associated with the disclosed technology may be performed continuously and by one or more computing devices. Each step in a process may be performed by the same or different computing devices as those used in other steps, and each step need not necessarily be performed by a single computing device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for classifying a node (200, 206, 1500) in a network (500-501, 1680), comprising:
receiving, by the node (200, 206, 1500), content published from one or more content producers (200A, 200D) in the network (500-501, 1680), wherein the node comprises sufficient storage (1226, 1522) and processing capability to store and process the content received; **characterized in that** the method further comprises:
determining, by the node, whether the node can receive additional content that is published for one or more other nodes (200, 206, 1500) in the network (500-501, 1680);
calculating, by the node (200, 206, 1500), a metric for paths from the node to each of the one or more content producers (200A, 200D) in the network (500-501, 1680) in response to determining that additional content can be received by the node; and
classifying, by the node, as a home node (200H, 206B) in the network (500-501, 1680) in response to determining that the metric for paths of the node to the one or more content producers (200A, 200D) is shorter than a metric for paths of each of the one or more other nodes (200, 206, 1500) in the network to the one or more content producers, wherein the home node is configured to provide the additional content to the one or more other nodes in the network.

2. The method of claim 1, further comprising:
receiving an announcement message from a new content producer (200D);
calculating the metric for path between the home node (200H, 206B) and each of the content producers (200A, 200D), including the new content producer (200D), in the network (500-501, 1680); and
determining whether to change the home node (200H, 206B) to a new home node based on the calculated matric for path of the home node being longer than a metric for path corresponding to any one of the one or more other nodes (200, 206, 1500).

3. The method of any one of claims 1 and 2, further comprises:
receiving a deactivation notification message from one or more of the content producers (200A, 200D); and
removing the one or more content producers (200A, 200D) sending the deactivation notification message from local storage (1226, 1522) of the home node (200H, 206B).

4. The method of any one of claims 1-3, further comprising:
transmitting a transfer (201H) request to one of the one or more other nodes (200, 206, 1500), including content name for the content stored in the home node (200H, 206B); and
receiving a transfer (201H) acceptance message from the one of the one or more other nodes (200, 206, 1500) accepting the transfer request to become a new home node (200H, 206B), or receiving a transfer denied message from the one of the one or more other nodes denying the transfer request to refuse to become a new home node.

5. The method of any one of claims 1-4, wherein the home node maintains information of the content including at least one of content name, number of content producers (200A, 200D), content producers location, a path to reach the content producer or a distance between the home node (200H, 206B) and the content producer.

6. The method of any one of claims 1-5, further comprising:
receiving, by the node, an interest message from a first of the one or more other nodes (200, 206, 1500); and
selecting, by the node (200, 206, 1500) one or more content producers (200A, 200D) to fetch content requested in the interest message.

7. The method of claim 6, further comprising:
requesting, by the node (200, 206, 1500), contextual information from the one or more content producers (200A, 200D); and
locally storing, by the node (200, 206, 1500), the contextual information and the content from the one or more content producers (200A, 200D).

8. The method of any one of claims 1-7, wherein the metric for paths is a time metric or a distance metric.

9. The method of any one of claims 1-8, further comprising managing, by the node, content of the one or more other nodes (200, 206, 1500) in a neighborhood of the network (500-501, 1680).

10. A node (200, 206, 1500) for accessing content in a network (500-501, 1680), comprising:
a memory storage(1226, 1522) comprising instructions; and
one or more processors (150, 1520) coupled to the memory (1620) that execute the instructions to:
receive, by the node (200, 206, 1500), content published from one or more content producers (200A, 200D) in the network (500-501, 1680), wherein the node comprises sufficient storage (1226, 1522) and processing capability to store and process the content received; **characterized in that** the method further comprises:
determine, by the node, whether the node can receive additional content that is published for one or more other nodes (200, 206, 1500) in the network (500-501, 1680);
calculate, by the node (200, 206, 1500), a metric for paths from the node to each of the one or more content producers (200A, 200D) in the network (500-501, 1680) in response to determining that additional content can be received by the node; and
classify, by the node, as a home node (200H, 206B) in the network (500-501, 1680) in response to determining that the metric for paths of the node to the one or more content producers (200A, 200D) is shorter than a metric for paths of each of the one or more other nodes (200, 206, 1500) in the network to the one or more content producers, wherein the home node is configured to provide the additional content to the one or more other nodes in the network.

11. The node (200, 206, 1500) of claim 10, the one or more processors (150, 1520) further execute the instructions to:
receive an announcement message from a new content producer (200D);
calculate the metric for path between the home node (200H, 206B) and each of the content producers (200A, 200D), including the new content producer (200D), in the network (500-501, 1680); and
determine whether to change the home node (200H, 206B) to a new home node based on the calculated matric for path of the home node being longer than a metric for path corresponding to any one of the one or more other nodes (200, 206, 1500).

12. The node (200, 206, 1500) of any one of claims 10 and 11, the one or more processors (150, 1520) further execute the instructions to:
receive a deactivation notification message from one or more of the content producers (200A, 200D); and
remove the one or more content producers (200A, 200D) sending the deactivation notification message from local storage (1226, 1522) of the home node (200H, 206B).

13. The node (200, 206, 1500) of any one of claims 10-12, the one or more processors (150, 1520) further execute the instructions to:
transmit a transfer (201H) request to one of the one or more other nodes (200, 206, 1500), including content name for the content stored in the home node (200H, 206B); and
receive a transfer (201H) acceptance message from the one of the one or more other nodes (200, 206, 1500) accepting the transfer request to become a new home node (200H, 206B), or receiving a transfer denied message from the one of the one or more other nodes denying the transfer request to refuse to become a new home node.

14. The node (200, 206, 1500) of any one of claims 10-13, the one or more processors (150, 1520) further execute the instructions to:
receiving, by the node, an interest message from a first of the one or more other nodes (200, 206, 1500); and
selecting, by the node (200, 206, 1500), one or more content producers (200A, 200D) to fetch content requested in the interest message.

15. The node (200, 206, 1500) of claim 14, the one or more processors (150, 1520) further execute the instructions to:
request contextual information, by the node (200, 206, 1500), from the one or more content producers (200A, 200D); and
locally storing, by the node (200, 206, 1500), the contextual information and the content from the one or more content producers (200A, 200D).

## Patentansprüche

1. Verfahren zum Klassifizieren eines Knotens (200, 206, 1500) in einem Netzwerk (500-501, 1680), wobei das Verfahren Folgendes umfasst:
Empfangen, durch den Knoten (200, 206, 1500), von Inhalt, der von ein oder mehreren Inhaltsproduzenten (200A, 200D) in dem Netzwerk (500-501, 1680) veröffentlicht wird,
wobei der Knoten ausreichende Speicherkapazität (1226, 1522) und Verarbeitungsleistung aufweist, um den empfangenen Inhalt zu speichern und zu verarbeiten;
**dadurch gekennzeichnet, dass** das Verfahren ferner Folgendes umfasst:
Bestimmen, durch den Knoten, ob der Knoten zusätzlichen Inhalt empfangen kann, der für ein oder mehrere andere Knoten (200, 206, 1500) in dem Netzwerk (500-501, 1680) veröffentlicht wird;
Berechnen, durch den Knoten (200, 206, 1500), einer Metrik für Pfade von dem Knoten zu jedem der ein oder mehreren Inhaltsproduzenten (200A, 200D) in dem Netzwerk (500-501, 1680) in Reaktion auf das Bestimmen, dass zusätzlicher Inhalt durch den Knoten empfangen werden kann; und
Klassifizieren, durch den Knoten, als ein Heimatknoten (200H, 206B) in dem Netzwerk (500-501, 1680) in Reaktion auf das Bestimmen, dass die Metrik für Pfade des Knotens zu den ein oder mehreren Inhaltsproduzenten (200A, 200D) kürzer als eine Metrik für Pfade jedes der ein oder mehreren anderen Knoten (200, 206, 1500) in dem Netzwerk zu den ein oder mehreren Inhaltsproduzenten ist,
wobei der Heimatknoten dazu ausgelegt ist, den zusätzlichen Inhalt den ein oder mehreren anderen Knoten in dem Netzwerk bereitzustellen.

2. Verfahren nach Anspruch 1, das ferner Folgendes umfasst:
Empfangen einer Ankündigungsmeldung von einem neuen Inhaltsproduzenten (200D);
Berechnen der Metrik für den Pfad zwischen dem Heimatknoten (200H, 206B) und jedem der Inhaltsproduzenten (200A, 200D), einschließlich des neuen Inhaltsproduzenten (200D), in dem Netzwerk (500-501, 1680); und
Bestimmen, ob der Heimatknoten (200H, 206B) zu einem neuen Heimatknoten zu ändern ist, basierend auf der berechneten Metrik für den Pfad des Heimatknotens, die länger als eine Metrik für den Pfad ist, der einem der ein oder mehreren anderen Knoten (200, 206, 1500) entspricht.

3. Verfahren nach einem der Ansprüche 1 und 2, das ferner Folgendes umfasst:
Empfangen einer Deaktivierungs-Benachrichtigungsmeldung von einem oder mehreren der Inhaltsproduzenten (200A, 200D); und
Entfernen der ein oder mehreren Inhaltsproduzenten (200A, 200D), welche die Deaktivierungs-Benachrichtigungsmeldung senden, von dem lokalen Speicher (1226, 1522) des Heimatknotens (200H, 206B).

4. Verfahren nach einem der Ansprüche 1-3, das ferner Folgendes umfasst:
Senden einer Anforderung für Übertragung (201H) zu einem der ein oder mehreren anderen Knoten (200, 206, 1500), die den Inhaltsnamen für den in dem Heimatknoten (200H, 206B) gespeicherten Inhalt enthält; und
Empfangen einer Annahmenachricht für Übertragung (201H) von dem einen der ein oder mehreren anderen Knoten (200, 206, 1500), der die Übertragungsanforderung annimmt, um ein neuer Heimatknoten (200H, 206B) zu werden, oder
Empfangen einer Übertragungsablehnungsnachricht von dem einen der ein oder mehreren anderen Knoten, der die Übertragungsanforderung ablehnt, um zu verweigern, ein neuer Heimatknoten zu werden.

5. Verfahren nach einem der Ansprüche 1-4,
wobei der Heimatknoten Informationen des Inhalts aufrechterhält, die zumindest ein Element eines Inhaltsnamens, einer Anzahl von Inhaltsproduzenten (200A, 200D), des Standorts der Inhaltsproduzenten, eines Pfads zum Erreichen des Inhaltsproduzenten oder eines Abstands zwischen dem Heimatknoten (200H, 206B) und dem Inhaltsproduzenten enthalten.

6. Verfahren nach einem der Ansprüche 1-5, das ferner Folgendes umfasst:
Empfangen, durch den Knoten, einer Interessenachricht von einem ersten der ein oder mehreren anderen Knoten (200, 206, 1500); und
Auswählen, durch den Knoten (200, 206, 1500), von ein oder mehreren Inhaltsproduzenten (200A, 200D), um in der Interessenachricht angeforderten Inhalt abzurufen.

7. Verfahren nach Anspruch 6, das ferner Folgendes umfasst:
Anfordern, durch den Knoten (200, 206, 1500), von Kontextinformationen von den ein oder mehreren Inhaltsproduzenten (200A, 200D); und
lokales Speichern, durch den Knoten (200, 206, 1500), der Kontextinformationen und des Inhalts von den ein oder mehreren Inhaltsproduzenten (200A, 200D).

8. Verfahren nach einem der Ansprüche 1-7,
wobei die Metrik für Pfade eine Zeitmetrik oder eine Abstandsmetrik ist.

9. Verfahren nach einem der Ansprüche 1-8, das ferner das Verwalten, durch den Knoten, des Inhalts der ein oder mehreren anderen Knoten (200, 206, 1500) in einer Nachbarschaft des Netzwerks (500-501, 1680) umfasst.

10. Knoten (200, 206, 1500) zum Zugreifen auf Inhalt in einem Netzwerk (500-501, 1680), der Folgendes umfasst:
eine Speichervorrichtung (1226, 1522), die Anweisungen enthält; und
ein oder mehrere mit dem Speicher (1620) gekoppelte Prozessoren (150, 1520), die die Anweisungen ausführen, um Folgendes zu bewirken:
Empfangen, durch den Knoten (200, 206, 1500), von Inhalt, der von ein oder mehreren Inhaltsproduzenten (200A, 200D) in dem Netzwerk (500-501, 1680) veröffentlicht wird,
wobei der Knoten ausreichende Speicherkapazität (1226, 1522) und Verarbeitungsleistung aufweist, um den empfangenen Inhalt zu speichern und zu verarbeiten;
**dadurch gekennzeichnet, dass** das Verfahren ferner Folgendes umfasst:
Bestimmen, durch den Knoten, ob der Knoten zusätzlichen Inhalt empfangen kann, der für ein oder mehrere andere Knoten (200, 206, 1500) in dem Netzwerk (500-501, 1680) veröffentlicht wird;
Berechnen, durch den Knoten (200, 206, 1500), einer Metrik für Pfade von dem Knoten zu jedem der ein oder mehreren Inhaltsproduzenten (200A, 200D) in dem Netzwerk (500-501, 1680) in Reaktion auf das Bestimmen, dass zusätzlicher Inhalt durch den Knoten empfangen werden kann; und
Klassifizieren, durch den Knoten, als ein Heimatknoten (200H, 206B) in dem Netzwerk (500-501, 1680) in Reaktion auf das Bestimmen, dass die Metrik für Pfade des Knotens zu den ein oder mehreren Inhaltsproduzenten (200A, 200D) kürzer als eine Metrik für Pfade jedes der ein oder mehreren anderen Knoten (200, 206, 1500) in dem Netzwerk zu den ein oder mehreren Inhaltsproduzenten ist,
wobei der Heimatknoten dazu ausgelegt ist, den zusätzlichen Inhalt den ein oder mehreren anderen Knoten in dem Netzwerk bereitzustellen.

11. Knoten (200, 206, 1500) nach Anspruch 10, wobei die ein oder mehreren Prozessoren (150, 1520) ferner die Anweisungen ausführen, um Folgendes zu bewirken:
Empfangen einer Ankündigungsmeldung von einem neuen Inhaltsproduzenten (200D);
Berechnen der Metrik für den Pfad zwischen dem Heimatknoten (200H, 206B) und jedem der Inhaltsproduzenten (200A, 200D), einschließlich des neuen Inhaltsproduzenten (200D), in dem Netzwerk (500-501, 1680); und
Bestimmen, ob der Heimatknoten (200H, 206B) zu einem neuen Heimatknoten zu ändern ist, basierend auf der berechneten Metrik für den Pfad des Heimatknotens, die länger als eine Metrik für den Pfad ist, der einem der ein oder mehreren anderen Knoten (200, 206, 1500) entspricht.

12. Knoten (200, 206, 1500) nach einem der Ansprüche 10 und 11, wobei die ein oder mehreren Prozessoren (150, 1520) ferner die Anweisungen ausführen, um Folgendes zu bewirken:
Empfangen einer Deaktivierungs-Benachrichtigungsmeldung von einem oder mehreren der Inhaltsproduzenten (200A, 200D); und
Entfernen der ein oder mehreren Inhaltsproduzenten (200A, 200D), welche die Deaktivierungs-Benachrichtigungsmeldung senden, von dem lokalen Speicher (1226, 1522) des Heimatknotens (200H, 206B).

13. Knoten (200, 206, 1500) nach einem der Ansprüche 10-12, wobei die ein oder mehreren Prozessoren (150, 1520) ferner die Anweisungen ausführen, um Folgendes zu bewirken:
Senden einer Anforderung für Übertragung (201H) zu einem der ein oder mehreren anderen Knoten (200, 206, 1500), die den Inhaltsnamen für den in dem Heimatknoten (200H, 206B) gespeicherten Inhalt enthält; und
Empfangen einer Annahmenachricht für Übertragung (201H) von dem einen der ein oder mehreren anderen Knoten (200, 206, 1500), der die Übertragungsanforderung annimmt, um ein neuer Heimatknoten (200H, 206B) zu werden, oder
Empfangen einer Übertragungsablehnungsnachricht von dem einen der ein oder mehreren anderen Knoten, der die Übertragungsanforderung ablehnt, um zu verweigern, ein neuer Heimatknoten zu werden.

14. Knoten (200, 206, 1500) nach einem der Ansprüche 10-13, wobei die ein oder mehreren Prozessoren (150, 1520) ferner die Anweisungen ausführen, um Folgendes zu bewirken:
Empfangen, durch den Knoten, einer Interessenachricht von einem ersten der ein oder mehreren anderen Knoten (200, 206, 1500); und
Auswählen, durch den Knoten (200, 206, 1500), von ein oder mehreren Inhaltsproduzenten (200A, 200D), um in der Interessenachricht angeforderten Inhalt abzurufen.

15. Knoten (200, 206, 1500) nach Anspruch 14, wobei die ein oder mehreren Prozessoren (150, 1520) ferner die Anweisungen ausführen, um Folgendes zu bewirken:
Anfordern von Kontextinformationen, durch den Knoten (200, 206, 1500), von den ein oder mehreren Inhaltsproduzenten (200A, 200D); und
lokales Speichern, durch den Knoten (200, 206, 1500), der Kontextinformationen und des Inhalts von den ein oder mehreren Inhaltsproduzenten (200A, 200D).

## Revendications

1. Procédé de classement d'un nœud (200, 206, 1500) dans un réseau (500-501, 1680), le procédé consistant à :
recevoir, par le nœud (200, 206, 1500), un contenu publié par un ou plusieurs producteurs de contenu (200A, 200D) dans le réseau (500-501, 1680), le nœud comprenant une capacité suffisante de stockage (1226, 1522) et de traitement pour stocker et traiter le contenu reçu ;
le procédé étant **caractérisé en ce qu'**il consiste en outre à :
déterminer, par le nœud, si le nœud peut recevoir un contenu supplémentaire qui est publié pour un ou plusieurs autres nœuds (200, 206, 1500) dans le réseau (500-501, 1680) ;
calculer, par le nœud (200, 206, 1500), un indicateur métrique concernant des chemins entre le nœud et chacun du ou des producteurs de contenu (200A, 200D) dans le réseau (500-501, 1680) en réponse à la détermination du fait qu'un contenu supplémentaire peut être reçu par le nœud ; et
classer, par le nœud, en tant que nœud domestique (200H, 206B) dans le réseau (500-501, 1680) en réponse à la détermination du fait que l'indicateur métrique concernant des chemins entre le nœud et le ou les producteurs de contenu (200A, 200D) est plus court qu'un indicateur métrique concernant des chemins entre chacun du ou des autres nœuds (200, 206, 1500) dans le réseau et le ou les producteurs de contenu, le nœud domestique étant configuré pour fournir le contenu supplémentaire au ou aux autres nœuds dans le réseau.

2. Procédé selon la revendication 1, consistant en outre à :
recevoir un message d'annonce en provenance d'un nouveau producteur de contenu (200D) ;
calculer l'indicateur métrique concernant un chemin entre le nœud domestique (200H, 206B) et chacun des producteurs de contenu (200A, 200D), y compris le nouveau producteur de contenu (200D), dans le réseau (500-501, 1680) ; et
déterminer s'il faut changer le nœud domestique (200H, 206B) pour un nouveau nœud domestique sur la base du fait que l'indicateur métrique calculé concernant un chemin du nœud domestique est plus long qu'un indicateur métrique concernant un chemin correspondant à l'un quelconque du ou des autres nœuds (200, 206, 1500).

3. Procédé selon l'une quelconque des revendications 1 et 2, consistant en outre à :
recevoir un message de notification de désactivation en provenance du ou des producteurs de contenu (200A, 200D) ; et
supprimer d'un stockage local (1226, 1522) du nœud domestique (200H, 206B) le ou les producteurs de contenu (200A, 200D) qui envoient le message de notification de désactivation.

4. Procédé selon l'une quelconque des revendications 1 à 3, consistant en outre à :
transmettre une demande de transfert (201H) à un du ou des autres nœuds (200, 206, 1500), incluant un nom de contenu concernant le contenu stocké dans le nœud domestique (200H, 206B) ; et
recevoir un message d'acceptation de transfert (201H) en provenance dudit nœud du ou des autres nœuds (200, 206, 1500) qui accepte la demande de transfert pour devenir un nouveau nœud domestique (200H, 206B), ou récupérer un message de refus de transfert en provenance dudit nœud du ou des autres nœuds qui refuse la demande de transfert pour refuser de devenir un nouveau nœud domestique.

5. Procédé selon l'une quelconque des revendications 1 à 4, dans lequel le nœud domestique conserve des informations du contenu, incluant au moins une information parmi un nom de contenu, un nombre de producteurs de contenu (200A, 200D), une localisation des producteurs de contenu, un chemin pour atteindre le producteur de contenu ou une distance entre le nœud domestique (200H, 206B) et le producteur de contenu.

6. Procédé selon l'une quelconque des revendications 1 à 5, consistant en outre à :
recevoir, par le nœud, un message d'intérêt en provenance d'un premier nœud du ou des autres nœuds (200, 206, 1500) ; et
sélectionner, par le nœud (200, 206, 1500) un ou plusieurs producteurs de contenu (200A, 200D) pour extraire un contenu demandé dans le message d'intérêt.

7. Procédé selon la revendication 6, consistant en outre à :
demander, par le nœud (200, 206, 1500), une information contextuelle auprès du ou des producteurs de contenu (200A, 200D) ; et
stocker localement, par le nœud (200, 206, 1500), l'information contextuelle et le contenu obtenus auprès du ou des producteurs de contenu (200A, 200D).

8. Procédé selon l'une quelconque des revendications 1 à 7, dans lequel l'indicateur métrique concernant des chemins est un indicateur métrique de temps ou un indicateur métrique de distance.

9. Procédé selon l'une quelconque des revendications 1 à 8, consistant en outre à gérer, par le nœud, un contenu du ou des autres nœuds (200, 206, 1500) au voisinage du réseau (500-501, 1680).

10. Nœud (200, 206, 1500) pour accéder à un contenu dans un réseau (500-501, 1680), le nœud comprenant :
un stockage mémoire (1226, 1522) comprenant des instructions ; et
un ou plusieurs processeurs (150, 1520) couplés à la mémoire (1620), qui exécutent les instructions pour :
recevoir, par le nœud (200, 206, 1500), un contenu publié par un ou plusieurs producteurs de contenu (200A, 200D) dans le réseau (500-501, 1680), le nœud comprenant une capacité suffisante de stockage (1226, 1522) et de traitement pour stocker et traiter le contenu reçu ;
le procédé étant **caractérisé en ce qu'**il consiste en outre à :
déterminer, par le nœud, si le nœud peut recevoir un contenu supplémentaire qui est publié pour un ou plusieurs autres nœuds (200, 206, 1500) dans le réseau (500-501, 1680) ;
calculer, par le nœud (200, 206, 1500), un indicateur métrique concernant des chemins entre le nœud et chacun du ou des producteurs de contenu (200A, 200D) dans le réseau (500-501, 1680) en réponse à la détermination du fait qu'un contenu supplémentaire peut être reçu par le nœud ; et
classer, par le nœud, en tant que nœud domestique (200H, 206B) dans le réseau (500-501, 1680) en réponse à la détermination du fait que l'indicateur métrique concernant des chemins entre le nœud et le ou les producteurs de contenu (200A, 200D) est plus court qu'un indicateur métrique concernant des chemins entre chacun du ou des autres nœuds (200, 206, 1500) dans le réseau et le ou les producteurs de contenu, le nœud domestique étant configuré pour fournir le contenu supplémentaire au ou aux autres nœuds dans le réseau.

11. Nœud (200, 206, 1500) selon la revendication 10, dans lequel le ou les processeurs (150, 1520) exécutent en outre les instructions pour :
recevoir un message d'annonce en provenance d'un nouveau producteur de contenu (200D) ;
calculer l'indicateur métrique concernant un chemin entre le nœud domestique (200H, 206B) et chacun des producteurs de contenu (200A, 200D), y compris le nouveau producteur de contenu (200D), dans le réseau (500-501, 1680) ; et
déterminer s'il faut changer le nœud domestique (200H, 206B) pour un nouveau nœud domestique sur la base du fait que l'indicateur métrique calculé concernant un chemin du nœud domestique est plus long qu'un indicateur métrique concernant un chemin correspondant à l'un quelconque du ou des autres nœuds (200, 206, 1500).

12. Nœud (200, 206, 1500) selon l'une quelconque des revendications 10 et 11, dans lequel le ou les processeurs (150, 1520) exécutent en outre les instructions pour :
recevoir un message de notification de désactivation en provenance du ou des producteurs de contenu (200A, 200D) ; et
supprimer d'un stockage local (1226, 1522) du nœud domestique (200H, 206B) le ou les producteurs de contenu (200A, 200D) qui envoient le message de notification de désactivation.

13. Nœud (200, 206, 1500) selon l'une quelconque des revendications 10 à 12, dans lequel le ou les processeurs (150, 1520) exécutent en outre les instructions pour :
transmettre une demande de transfert (201H) à un du ou des autres nœuds (200, 206, 1500), incluant un nom de contenu concernant le contenu stocké dans le nœud domestique (200H, 206B) ; et
recevoir un message d'acceptation de transfert (201H) en provenance dudit nœud du ou des autres nœuds (200, 206, 1500) qui accepte la demande de transfert pour devenir un nouveau nœud domestique (200H, 206B), ou récupérer un message de refus de transfert en provenance dudit nœud du ou des autres nœuds qui refuse la demande de transfert pour refuser de devenir un nouveau nœud domestique.

14. Nœud (200, 206, 1500) selon l'une quelconque des revendications 10 à 13, dans lequel le ou les processeurs (150, 1520) exécutent en outre les instructions pour :
recevoir, par le nœud, un message d'intérêt en provenance d'un premier nœud du ou des autres nœuds (200, 206, 1500) ; et
sélectionner, par le nœud (200, 206, 1500) un ou plusieurs producteurs de contenu (200A, 200D) pour extraire un contenu demandé dans le message d'intérêt.

15. Nœud (200, 206, 1500) selon la revendication 14, dans lequel le ou les processeurs (150, 1520) exécutent en outre les instructions pour :
demander une information contextuelle, par le nœud (200, 206, 1500), auprès du ou des producteurs de contenu (200A, 200D) ; et
stocker localement, par le nœud (200, 206, 1500), l'information contextuelle et le contenu obtenus auprès du ou des producteurs de contenu (200A, 200D).
